# EUROPEAN PATENT SPECIFICATION

(11) **EP 4 142 368 B1**
(45) Date of publication and mention of the grant of the patent: **04.11.2026**
(21) Application number: 21809520.6
(22) Date of filing: 27.01.2021
(51) Int. Cl.: H04W 40/22, H04W 40/24, H04W 40/02, H04L 45/74, H04W 4/06, H04W 4/46

(54) **COMMUNICATION METHOD AND APPARATUS, COMMUNICATION DEVICE, AND SYSTEM**
KOMMUNIKATIONSVERFAHREN UND -VORRICHTUNG, KOMMUNIKATIONSVORRICHTUNG UND SYSTEM
PROCÉDÉ ET APPAREIL DE COMMUNICATION, DISPOSITIF DE COMMUNICATION ET SYSTÈME

(30) Priority: 22.05.2020 CN 202010444348
(43) Date of publication of application: 01.03.2023
(73) Proprietor: Huawei Technologies Co., Ltd., Shenzhen, Guangdong 518129 (CN)
(72) Inventor: WANG, Jun, Shenzhen, Guangdong 518129 (CN); SHI, Yulong, Shenzhen, Guangdong 518129 (CN)
(74) Representative: Pfenning, Meinig & Partner mbB
(86) International application number: PCT/CN2021/073900
(87) International publication number: WO 2021/232844

(56) References cited:
- EP-A1- 3 618 391
- WO-A1-2018/019056
- WO-A1-2019/242683
- CN-A- 105 704 031
- CN-A- 110 036 606
- CN-A- 110 312 209
- CN-A- 110 622 563
- US-B2- 10 602 424

## Description

### TECHNICAL FIELD

This application relates to the field of communication technologies, and in particular, tc methods, a communication device, a storage medium, a computer program and a system.

### BACKGROUND

In a wireless communication system, data communication may be performed between user equipments (user equipments, UEs) through a network, or communication between the UEs may be directly performed without using a network device. A link for the direct communication between the UEs may be referred to as a sidelink (sidelink, SL). Similar to a Uu interface for communication between the UE and a base station, an interface for SL communication may be referred to as a PC5 interface. A typical application scenario of the SL communication is vehicle to everything (vehicle to everything, V2X). In V2X, each vehicle may be considered as UE, and data transmission may be directly performed between UEs through an SL, so that a network does not need to be used. In this way, a communication delay is effectively reduced.

When communication is performed between the UEs through the SL, a communication distance cannot be very long due to a limited hardware capability of data sending UE, external environment interference, or the like. As a result, a scenario in which communication is performed between the UEs through the SL is limited.

WO2019242683 A1 describes a path changing method that comprises: a first node establishing a first path and a second path with a second node, wherein both the first node and the second node are nodes in the wireless access network, and the first node is the wireless backhaul node or the host node or a distributed unit of the host node; the first node sending a data packet to the second node by means of the first path; and when the first node determines that path changing conditions are established, the first node changing to the second path from the first path and sending the data packet to the second node. WO2018019056 A1 concerns a data transmission method and a relay node. A relay discovery and relay forwarding method that comprises: performing a relay discovery operation; discovering a relay device that carries out relay and forwarding for a source device; sending a data packet to the relay device; and forwarding the data packet to a target device by means of the relay device is known from EP 3 618 391 A1.

### SUMMARY

The present invention provides communication methods, a communication device, computer-readable storage medium, a computer program product and a system according to the claims. Particular embodiments are defined in the dependent claims.

### BRIEF DESCRIPTION OF DRAWINGS

The following briefly describes the accompanying drawings that need to be used in the descriptions of the embodiments or the current technology.
FIG. 1 is a schematic diagram of an architecture of a UE-to-UE forwarding system according to an embodiment of this application;
FIG. 2 is a schematic diagram of a user plane protocol stack in an L3 forwarding architecture of a UE-to-UE forwarding system according to an embodiment of this application;
FIG. 3 is a schematic diagram of a user plane protocol stack in an L2 forwarding architecture of a UE-to-UE forwarding system according to an embodiment of this application;
FIG. 4 is a schematic diagram of an SL communication architecture in a UE-to-UE forwarding system according to an embodiment of this application;
FIG. 5A and FIG. 5B is a schematic flowchart of SL communication in a UE-to-UE forwarding system according to an embodiment of this application;
FIG. 6 is a schematic diagram of an architecture of routing table change and packet change in an SL communication process in a UE-to-UE forwarding system according to an embodiment of this application;
FIG. 7 is a schematic diagram of an SL communication architecture in another UE-to-UE forwarding system according to an embodiment of this application;
FIG. 8 is a schematic diagram of an SL communication architecture in a UE-to-UE forwarding system according to an embodiment of this application;
FIG. 9 is a schematic flowchart of reverse SL communication between UE 1 and UE 2 in a UE-to-UE forwarding system according to an embodiment of this application;
FIG. 10 is a schematic diagram of an architecture of routing table change and packet change in an SL communication process in a UE-to-UE forwarding system according to an embodiment of this application;
FIG. 11 is a schematic diagram of an SL communication architecture in another UE-to-UE forwarding system according to an embodiment of this application;
FIG. 12 is a schematic diagram of an SL communication architecture in a UE-to-UE forwarding system according to an embodiment of this application;
FIG. 13 is a schematic diagram of an architecture of routing table change and packet change in an SL communication process in a UE-to-UE forwarding system according to an embodiment of this application;
FIG. 14 is a schematic diagram of a data packet processing process according to Embodiment 4 of this application;
FIG. 15 is a schematic diagram of a data packet forwarding architecture in a UE-to-UE forwarding system according to Embodiment 4 of this application;
FIG. 16 is a schematic diagram of a forwarding architecture of a data packet in forwarding UE according to Embodiment 4 of this application;
FIG. 17 is a schematic diagram of four models for a BAP layer in forwarding UE according to Embodiment 4 of this application;
FIG. 18 is a schematic diagram of a data packet processing process according to Embodiment 5 of this application;
FIG. 19 is a schematic diagram of a data packet forwarding architecture in a UE-to-UE forwarding system according to Embodiment 5 of this application;
FIG. 20 is a schematic diagram of a data packet forwarding architecture in a UE-to-UE forwarding system according to Embodiment 6 of this application;
FIG. 21 is a schematic diagram of a data packet forwarding architecture in another UE-to-UE forwarding system according to Embodiment 6 of this application;
FIG. 22 is a schematic diagram of a data packet forwarding architecture in a UE-to-UE forwarding system according to Embodiment 7 of this application;
FIG. 23 is a schematic diagram of an architecture in which a data packet is transmitted in each PDCP entity in an SL communication connection according to Embodiment 7 of this application;
FIG. 24 is a schematic diagram of a structure of a communication apparatus according to an embodiment of this application;
FIG. 25 is a schematic diagram of a structure of a communication apparatus according to an embodiment of this application; and
FIG. 26 is a schematic diagram of a structure of a communication device according to an embodiment of this application.

### DESCRIPTION OF EMBODIMENTS

The following describes the technical solutions in embodiments of this application with reference to accompanying drawings in embodiments of this application.

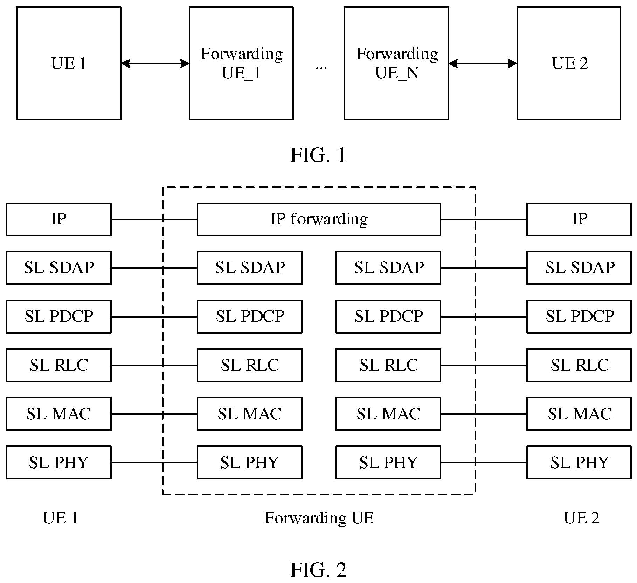

To resolve a problem of a limited SL communication distance between UEs, a UE-to-UE forwarding system is introduced in this application. As shown in FIG. 1, the UE-to-UE forwarding system includes one sending UE (UE 1), one receiving UE (UE 2), and at least one forwarding (forwarding) UE (forwarding UE_1 to forwarding UE _N). Data such as a service or signaling is transmitted between the UE 1 and the UE 2 through the at least one forwarding UE.

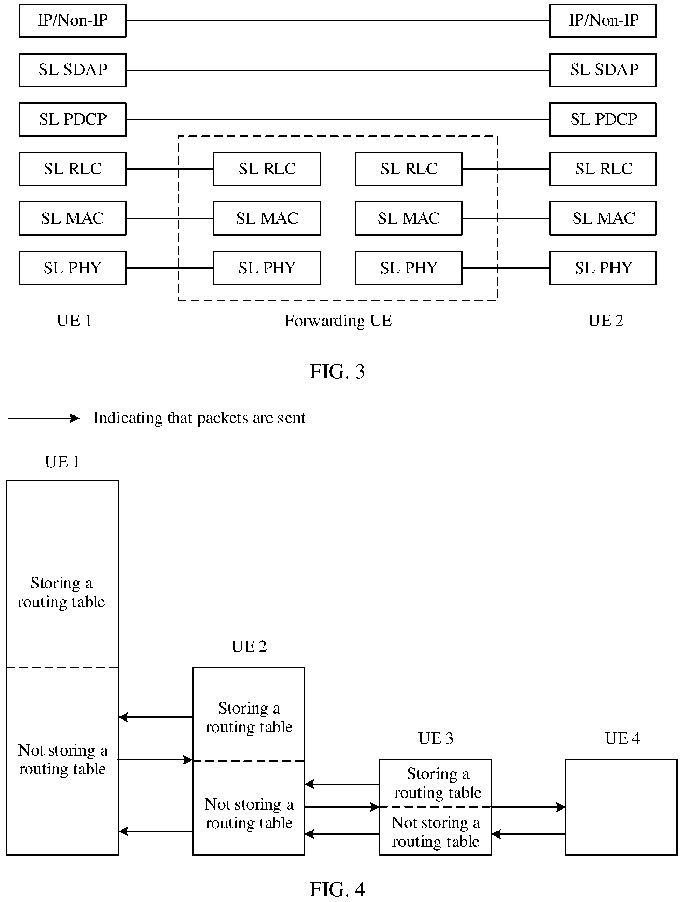

From a perspective of a transmission protocol stack, the UE-to-UE forwarding system may be divided into a layer 3 (layer 3, L3) forwarding architecture and a layer 2 (layer 2, L2) forwarding architecture. For the L3 forwarding architecture, user data is relayed at an internet protocol (internet protocol, IP) layer. In this case, a user plane protocol stack may be that shown in FIG. 2 (one forwarding UE is used as an example). For the L2 forwarding architecture, user data may be relayed at a protocol layer below a packet data convergence protocol (packet data adaptation protocol, PDCP) layer. In this case, a user plane protocol stack may be that shown in FIG. 3 (one forwarding UE is used as an example).

Terms such as "user equipment" or "UE" in this application may also be replaced with "node", "network device", or the like. In other words, this application may be applicable to a relay system, and is not limited to the UE-to-UE forwarding system, for example, may be an integrated access and backhaul (integrated access and backhaul, IAB) network system. In this application, "packet" may be replaced with "data" or "data packet".

In this application, a destination multicast/broadcast identifier may be equivalent to indication information indicating to construct a routing table. Certainly, dedicated indication information indicating whether to construct a reverse routing table may also be added to each packet. In this way, after receiving the destination multicast/broadcast packet, UE does not need to query whether a corresponding routing table is stored. If no corresponding routing table is stored, a corresponding routing table is generated.

In this application, that the UE 1 sends a packet to the UE 2 in a broadcast manner may be understood as that the UE 1 sends the packet in a broadcast manner, and the UE 2 receives the broadcast packet.

In this application, an identifier of UE may be any identifier of the UE, for example, an application (application, APP) ID of the UE, or an SL L2 ID of the UE.

In this application, each SL communication connection may be an SL communication connection between receiving UE and sending UE. The communication connection may be determined by using identifiers of the receiving UE and the sending UE corresponding to the communication connection. For example, each SL communication connection may be identified by using one source L2 ID (an identifier of the sending UE) and one destination L2 ID (an identifier of the receiving UE). It should be understood that at least one forwarding UE may be further included between the receiving UE and the sending UE corresponding to each SL communication connection. For example, a relay connection sending data by UE 1 to UE 3 through UE 2 may be considered as one SL communication connection. The SL communication connection actually includes two SLs: an SL 1 between the UE 1 and the UE 2 and an SL 2 between the UE 2 and the UE 3. The SL communication connection may also be referred to as a forwarding connection.

In this application, a sidelink radio bearer (sidelink radio bearer, SL RB) used to receive and send data on the SL may refer to an SL RB of L2 forwarding UE, that is, may include at least one of a MAC layer, an SL logical channel (logical channel, LCH), and an RLC layer. A BAP layer above the RLC layer may be further included. The L2 SL RB may not include a PDCP layer. The sidelink radio bearer may also refer to an SL RB of L3 forwarding UE, that is, the PDCP layer is included.

In this application, in a protocol stack of a user equipment, a relay device, or a Uu interface of a network device, layer 1 (layer 1, L1) generally refers to a PHY layer, layer 2 (layer 2, L2) refers to a MAC layer, an RLC layer, an Adapt layer, or a PDCP layer, and layer 3 (layer 3, L3) generally refers to an RRC layer, a NAS layer, or an IP layer. In this application, a bearer may include one or more of a radio bearer (radio bearer, RB), an RLC bearer, or a MAC bearer. The RB may include a signaling radio bearer (signal radio bearer, SRB) and a data radio bearer (data radio bearer, DRB). The SRB may include the PDCP layer and/or a channel between the PDCP layer and the RLC layer. The DRB may include the RRC layer and/or a channel between the RRC layer and the RLC layer. The RLC bearer may include the RLC layer and/or a logical channel between the RLC layer and the MAC layer. The MAC bearer may include the MAC layer and/or a transport channel (transport channel) between the MAC layer and the PHY layer. The bearer may be identified by using a bearer identifier. The bearer identifier may include one or more of a signaling radio bearer identifier (signal radio bearer identity, SRB ID), a data radio bearer identifier (data radio bearer identity, DRB ID), a logical channel identifier (logical channel identity, LCID), or a quality of service flow (quality of service flow, QoS flow) identifier. The bearer may be identified by using a bearer index. The bearer index may include one or more of a signaling radio bearer index (signal radio bearer index), a data radio bearer index (data radio bearer index), or a logical channel identifier (logical channel identity, LCID) index. A bearer identifier of a PDCP bearer may be the DRB ID or the SRB ID. A bearer identifier of the RLC bearer may be the LCID.

### Embodiment 1

FIG. 4 is a schematic diagram of an SL communication architecture in a UE-to-UE forwarding system according to an embodiment of this application. As shown in FIG. 4, in a process in which UE 1 actively sends data to final receiving UE (it is specified that the process is forward SL communication), two forwarding UEs are used as an example in this embodiment of this application to describe forward SL communication between the UE 1 and UE 4. The UE 1 may be referred to as sending UE, UE 2 and UE 3 may be referred to as forwarding UEs, and the UE 4 may be referred to as receiving UE.

For the UE 1, in a process of performing the forward SL communication with the UE 4, if the UE 1 determines that the UE 1 does not have a routing table for routing data from the UE 1 to the UE 4, the UE 1 sends a packet to another UE in a multicast or broadcast manner, to search for forwarding UE to forward a data packet to be sent by the UE 1 to the UE 4.

The UE 2 is one of other UEs to which the UE 1 sends the packet in the multicast or broadcast manner. After receiving the packet sent by the UE 1, the UE 2 queries whether the UE 2 has a routing table that can perform forward SL communication with the UE 4. If the UE 2 has the routing table that can perform the forward SL communication with the UE 4, the UE 2 sends a feedback packet to the UE 1, so that the UE 1 constructs the routing table for routing data from the UE 1 to the UE 4 and can send the data packet to the UE 4 through the UE 2. If the UE 2 does not have the routing table that can perform the forward SL communication with the UE 4, the UE 2 needs to further send a packet to another UE in a multicast or broadcast manner, and then searches for forwarding UE to forward the to-be-sent data packet to the UE 4.

The UE 3 is one of other UEs to which the UE 2 sends the packet in the multicast or broadcast manner. After receiving the packet sent by the UE 2, the UE 3 queries whether the UE 3 has a routing table that can perform forward SL communication with the UE 4. If the UE 3 has the routing table that can perform the forward SL communication with the UE 4, the UE 3 sends feedback information to the UE 2, so that the UE 2 constructs a routing table for data routing with the UE 3. Then, the UE 2 also sends feedback information to the UE 1, so that the UE 1 constructs the routing table for routing data from the UE 1 to the UE 4. If the UE 3 does not have the routing table that can perform the forward SL communication with the UE 4, the UE 3 needs to further send a packet to another UE in a multicast or broadcast manner, and then searches for forwarding UE to forward the to-be-sent data packet to the UE 4.

Optionally, after the UE 2 constructs the routing table for data routing with the UE 3, the UE 2 may also be triggered to send the feedback information to the UE 1, so that the UE 1 constructs the routing table for routing data from the UE 1 to the UE 4 and can send the data packet to the UE 4 through the UE 2 and the UE 3.

The UE 4 is one of others UE to which the UE 3 sends the packet in the multicast or broadcast manner. After receiving the packet sent by the UE 3, when determining that the UE 4 is the final receiving UE of the data packet to be sent by the UE 1, the UE 4 sends feedback information to the UE 3, so that the UE 3 constructs a routing table for data routing with the UE 4.

Optionally, after the UE 3 constructs the routing table for data routing with the UE 4, the UE 3 may also send feedback information to the UE 2, so that the UE 2 constructs the routing table for data routing with the UE 3. Then, the UE 2 may also send the feedback information to the UE 1, so that the UE 1 constructs the routing table for routing data from the UE 1 to the UE 4 and can send the data packet to the UE 4 through the UE 2 and the UE 3.

In this embodiment of this application, when SL communication cannot be implemented between UEs due to a hardware capability, a distance, external interference, or the like, a UE-to-UE forwarding system is introduced. To be specific, at least one forwarding UE is added between sending UE and receiving UE, and then a routing table for data transmission between the sending UE and forwarding UE, between forwarding UEs, and between the forwarding UE and the receiving UE is constructed, so that the sending UE sends data to the receiving UE.

The following describes, by using a flowchart, a process of forward SL communication between the UE 1 and the UE 4 in this embodiment of this application.

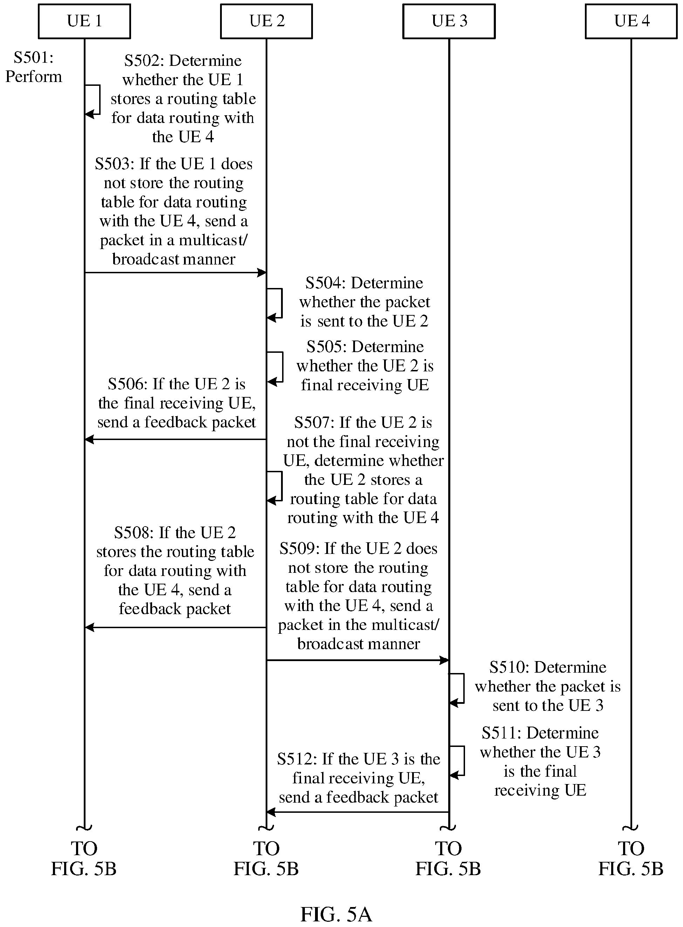

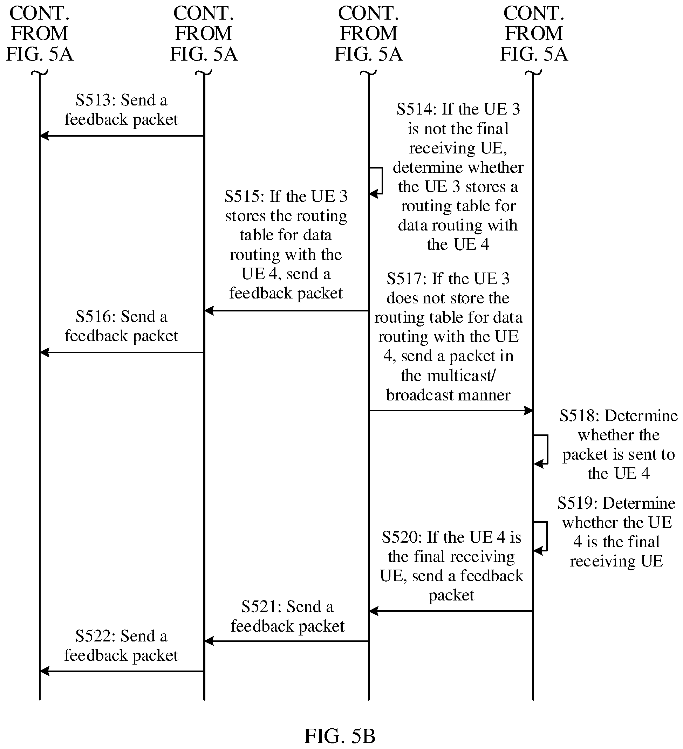

FIG. 5A and FIG. 5B is a schematic flowchart of SL communication in a UE-to-UE forwarding system according to an embodiment of this application.

As shown in FIG. 5A and FIG. 5B, in this embodiment of this application, two forwarding UEs are used as an example to describe a process of establishing SL communication between UE 1 and final receiving UE. A working process between UEs in the UE-to-UE forwarding system is as follows.

Step S501: The UE 1 performs forward SL communication with the final receiving UE.

Step S502: The UE 1 queries whether the UE 1 has a routing table for data routing with the final receiving UE. If the UE 1 has the routing table for data routing with the final receiving UE, the UE 1 directly performs the forward SL communication with the final receiving UE; or if the UE 1 does not have the routing table for data routing with the final receiving UE, the UE 1 performs step S503.

In this embodiment of this application, in a process in which the UE 1 sends a data packet to the final receiving UE, a routing table that is used to determine next-hop UE for forwarding the data packet may include one or more of an initial (PREV) identifier, a next-hop (NEXT) identifier, and a target (TGT) identifier. The PREV identifier indicates that the data packet is sent by UE corresponding to the identifier. The NEXT identifier indicates the next-hop UE to which the data packet is sent. The TGT identifier indicates the final receiving UE that finally receives the data packet.

For example, a manner in which the UE 1 queries whether the UE 1 has the routing table for data routing with the final receiving UE may be as follows: After obtaining an identifier of the final receiving UE, the UE 1 queries, based on the identifier of the final receiving UE, TGT identifiers in all routing tables stored in the UE 1, and determines whether any TGT identifier in all the routing tables is the same as the identifier of the final receiving UE. If any TGT identifier in all the routing tables is the same as the identifier of the final receiving UE, it indicates that the UE 1 can perform the forward SL communication with the final receiving UE; or if no TGT identifier in all the routing tables is the same as the identifier of the final receiving UE, it indicates that the UE 1 cannot perform the forward SL communication with the final receiving UE.

Step S503: The UE 1 sends a packet in a multicast or broadcast manner.

The packet may be any type of packet, for example, may be a connection establishment request message, a route request message, or a user data packet. The packet may be a first packet.

In this embodiment of this application, a packet used for the forward SL communication generally carries one or more of a PREV identifier, a NEXT identifier, and a TGT identifier. The PREV identifier is an identifier of UE that sends the packet, the NEXT identifier is an identifier of UE that receives the packet or an identifier of next-hop UE, and the TGT identifier is an identifier of UE that finally receives the data packet and that performs the forward SL communication.

The packet sent by the UE 1 may be sent in a broadcast, multicast, or unicast communication manner. Broadcast communication is similar to broadcasting system information with a base station, that is, UE sends broadcast data to the outside, and any other UE in an effective receiving range can receive the broadcast data if the UE is interested in the broadcast data. Multicast communication refers to communication between all UEs in a communication group, and any UE in the group can receive and send data of a multicast service. Unicast communication is similar to data communication performed after an RRC connection is established between UE and a base station. A unicast connection needs to be first established between two UEs. After the unicast connection is established, the two UEs may perform data communication based on a negotiated identifier. Data may be encrypted or may not be encrypted. Compared with the broadcast communication, the unicast communication can be performed only between two UEs that have established a unicast connection.

For example, if the UE 1 sends the packet in the multicast or broadcast manner based on a requirement (for example, a requirement for a faster speed or a higher success rate to perform the forward SL communication with UE 4), the UE 1 may set the NEXT identifier carried in the packet as a destination multicast/broadcast identifier. The destination multicast identifier is an identifier corresponding to sending of one or more multicast services in a same group, and the destination broadcast identifier is an identifier corresponding to sending of a broadcast service.

Step S504: After receiving the packet sent by the UE 1, UE 2 determines, based on a NEXT identifier in the packet, whether the packet is sent to the UE 2. If the packet is not sent to the UE 2, subsequent operations are terminated; or if the packet is sent to the UE 2, step S505 is performed.

Specifically, after receiving the packet sent by the UE 1, the UE 2 parses the packet. After obtaining the NEXT identifier, the UE 2 determines whether the NEXT identifier is an identifier corresponding to a broadcast service that the UE 2 has subscribed to (or an identifier corresponding to a multicast service subscribed to by a group to which the UE 2 belongs). If yes, it indicates that the packet is sent to the UE 2. If not, it indicates that the packet is not sent to the UE 2, and then the subsequent operations are terminated. Optionally, the UE 2 may not determine whether the packet is sent to the UE 2. For example, the UE 2 may always consider that the packet is sent to the UE 2. Then, when forwarding is required, the UE 2 performs the forwarding unconditionally.

Step S505: The UE 2 determines, based on a TGT identifier in the packet sent by the UE 1, whether the UE 2 is the final receiving UE. If the UE 2 is the final receiving UE, the UE 2 performs step S506; or if the UE 2 is not the final receiving UE, the UE 2 performs step S507.

Specifically, the UE 2 continues to parse the packet. After obtaining the TGT identifier, the UE 2 finds, based on the TGT identifier, whether an identifier of the UE 2 is the same as the TGT identifier. If the identifier of the UE 2 is the same as the TGT identifier, it indicates that the UE 2 is the final receiving UE; or if the identifier of the UE 2 is different from the TGT identifier, it indicates that the UE 2 is forwarding UE.

Step S506: When determining that the UE 2 is the final receiving UE, the UE 2 sends a feedback packet to the UE 1.

The feedback packet indicates that the UE 2 is the final receiving UE.

Specifically, the feedback packet may be a packet reconstructed by the UE 2, where a PREV identifier in the packet is the identifier of the UE 2, a NEXT identifier is an identifier of the UE 1, and a TGT identifier is still the identifier of the UE 2. Alternatively, the feedback packet may be obtained by reconfiguring the packet sent in step S503 in a manner of setting the PREV identifier from an identifier of the UE 1 to the identifier of the UE 2, setting the NEXT identifier from the destination multicast/broadcast identifier to the identifier of the UE 1. Then, the feedback packet is sent to the UE 1.

After receiving the feedback packet, the UE 1 determines that there is the final receiving UE in multicast or broadcast objects in step S503, and may construct a routing table for data routing between the UE 1 and the UE 2, so that the UE 1 can send a data packet to the UE 2.

In this case, because it is considered that the UE 2 is the final receiving UE, a NEXT identifier of the constructed routing table is the identifier of the UE 2, and/or a TGT identifier is the identifier of the UE 2. The packet may be a second packet.

Step S507: When determining that the UE 2 is not the final receiving UE, the UE 2 further determines whether the UE 2 stores a routing table for data routing with the final receiving UE. If the UE 2 stores the routing table for data routing with the final receiving UE, the UE 2 performs step S508; or if the UE 2 does not store the routing table for data routing with the final receiving UE, the UE 2 performs step S509.

A manner in which the UE 2 queries whether the UE 2 has the routing table for data routing with the final receiving UE may be the same as the query manner for the UE 1. To be specific, after parsing out the identifier of the final receiving UE, the UE 2 queries, based on the identifier of the final receiving UE, TGT identifiers in all routing tables stored in the UE 2, and determines whether any TGT identifier in all the routing tables is the same as the identifier of the final receiving UE. If any TGT identifier in all the routing tables is the same as the identifier of the final receiving UE, it indicates that the UE 2 has the routing table for data routing with the final receiving UE; or if no TGT identifier in all the routing tables is the same as the identifier of the final receiving UE, it indicates that the UE 2 has no routing table for data routing with the final receiving UE.

Step S508: After determining that the UE 2 has the routing table for data routing with the final receiving UE, the UE 2 sends a feedback packet to the UE 1.

The feedback packet indicates that the UE 2 can perform data routing with the final receiving UE.

As described in step S506, the feedback packet may be a packet reconstructed by the UE 2, or may be a packet obtained by reconfiguring the packet sent in step S503. Then, the feedback packet is sent to the UE 1.

After receiving the feedback packet, the UE 1 may construct a routing table for data routing between the UE 1 and the UE 2, and further construct a routing table for data routing between the UE 1 and the final receiving UE, so that the UE 1 can send a data packet to the UE 2.

In this case, a NEXT identifier of the constructed routing table is an identifier of the UE 2, and a TGT identifier is the identifier of the final receiving UE.

The packet may be a second packet.

Step S509: After determining that the UE 2 does not have the routing table for data routing with the final receiving UE, the UE 2 further sends a packet in the multicast or broadcast manner.

The packet may be a packet reconstructed by the UE 2, or may be a packet obtained by reconfiguring the packet sent in step S503 in a manner of setting the PREV identifier from an identifier of the UE 1 to an identifier of the UE 2 and setting the NEXT identifier from the destination multicast/broadcast identifier to a destination multicast/broadcast identifier of the UE 2. Then, the packet is sent in the broadcast/multicast manner. The packet may be a third packet.

Specifically, when the UE 2 does not have the routing table for data routing with the final receiving UE, it indicates that the UE 2 cannot perform data routing with the final receiving UE. In this case, the UE 2 may choose to give up further processing. Certainly, the UE 2 may choose to perform further processing, and then search for another UE, so that the UE 1 performs the forward SL communication with the final receiving UE through the UE 2 as a relay.

Step S510: After receiving the packet sent by the UE 2, UE 3 determines, based on a NEXT identifier in the packet, whether the packet is sent to the UE 3. If the packet is not sent to the UE 3, subsequent operations are terminated; or if the packet is sent to the UE 3, step S511 is performed.

This is the same as step S504: After receiving the packet sent by the UE 2, the UE 3 parses the packet. After obtaining the NEXT identifier, the UE 3 determines whether the NEXT identifier is an identifier corresponding to a broadcast service that the UE 3 has subscribed to (or an identifier corresponding to a multicast service subscribed to by a group to which the UE 3 belongs). If yes, it indicates that the packet is sent to the UE 3. If not, it indicates that the packet is not sent to the UE 3, and then the subsequent operations are terminated. Optionally, the UE 3 may not determine whether the packet is sent to the UE 3, that is, the UE 3 may always consider that the packet is sent to the UE 3. Then, when forwarding is required, the UE 3 performs the forwarding unconditionally.

Step S511: The UE 3 determines, based on a TGT identifier in the packet sent by the UE 2, whether the UE 3 is the final receiving UE. If the UE 3 is the final receiving UE, the UE 3 performs step S512; or if the UE 3 is not the final receiving UE, the UE 3 performs step S514.

This is the same as step S505: The UE 3 continues to parse the packet. After obtaining the TGT identifier, the UE 3 finds, based on the TGT identifier, whether an identifier of the UE 3 is the same as the TGT identifier. If the identifier of the UE 3 is the same as the TGT identifier, it indicates that the UE 3 is the final receiving UE; or if the identifier of the UE 3 is different from the TGT identifier, it indicates that the UE 3 is forwarding UE.

Step S512: When determining that the UE 3 is the final receiving UE, the UE 3 sends a feedback packet to the UE 2.

The feedback packet indicates that the UE 3 is the final receiving UE.

As described in step S506, the feedback packet may be a packet reconstructed by the UE 3, or may be a packet obtained by reconfiguring the packet sent in step S509. Then, the feedback packet is sent to the UE 2.

The packet may be a fourth packet.

After receiving the feedback packet, the UE 2 determines that there is the final receiving UE in multicast or broadcast objects in step S509, and may construct a routing table for data routing between the UE 2 and the UE 3, so that the UE 2 can send a data packet to the UE 3.

In this case, because it is considered that the UE 3 is the final receiving UE, a NEXT identifier of the constructed routing table is the identifier of the UE 3 and a TGT identifier is the identifier of the UE 3.

Step S513: The UE 2 sends a feedback packet to the UE 1. The feedback packet indicates that the UE 2 can perform data routing with the UE 4.

As described in step S506, the feedback packet may be a packet reconstructed by the UE 2, or may be a packet obtained by reconfiguring the packet sent in step S503. Then, the feedback packet is sent to the UE 1.

After receiving the feedback packet, the UE 1 may construct a routing table for data routing between the UE 1 and the UE 2, so that the UE 1 can send a data packet to the UE 2.

In this case, because it is considered that the UE 3 is the final receiving UE, a NEXT identifier of the constructed routing table is the identifier of the UE 2 and a TGT identifier is the identifier of the UE 3.

The packet may be a second packet.

Step S514: When determining that the UE 3 is not the final receiving UE, the UE 3 further determines whether the UE 3 stores a routing table for data routing with the final receiving UE. If the UE 3 stores the routing table for data routing with the final receiving UE, the UE 3 performs step S515; or if the UE 3 does not store the routing table for data routing with the final receiving UE, the UE 3 performs step S517.

This is the same as step S507: After parsing out the identifier of the final receiving UE, the UE 3 queries, based on the identifier of the final receiving UE, TGT identifiers in all routing tables stored in the UE 3, and determines whether any TGT identifier in all the routing tables is the same as the identifier of the final receiving UE. If any TGT identifier in all the routing tables is the same as the identifier of the final receiving UE, it indicates that the UE 3 has the routing table for data routing with the UE 4; or if no TGT identifier in all the routing tables is the same as the identifier of the UE 4, it indicates that the UE 3 has no routing table for data routing with the UE 4.

Step S515: After determining that the UE 3 has the routing table for data routing with the final receiving UE, the UE 3 sends a feedback packet to the UE 2.

The feedback packet indicates that the UE 3 can perform data routing with the final receiving UE.

As described in step S506, the feedback packet may be a packet reconstructed by the UE 3, or may be a packet obtained by reconfiguring the packet sent in step S509. Then, the feedback packet is sent to the UE 2. The packet may be a fourth packet.

After receiving the feedback packet, the UE 2 may construct a routing table for data routing between the UE 2 and the UE 3, so that the UE 2 can send a data packet to the UE 3.

In this case, a NEXT identifier of the constructed routing table is an identifier of the UE 2, and a TGT identifier is the identifier of the final receiving UE.

Step S516: The UE 2 sends a feedback packet to the UE 1.

The feedback packet indicates that the UE 2 can perform data routing with the final receiving UE.

As described in step S506, the feedback packet may be a packet reconstructed by the UE 2, or may be a packet obtained by reconfiguring the packet sent in step S503. Then, the feedback packet is sent to the UE 1.

After receiving the feedback packet, the UE 1 may construct a routing table for data routing between the UE 1 and the UE 2, so that the UE 1 can send a data packet to the UE 2.

In this case, a NEXT identifier of the constructed routing table is the identifier of the UE 2, and a TGT identifier is the identifier of the final receiving UE.

The packet may be a second packet.

Step S517: After determining that the UE 3 does not have the routing table for data routing with the UE 4, the UE 3 further sends a packet in the multicast or broadcast manner.

This is the same as step S509: The packet may be a packet reconstructed by the UE 3, or may be a packet obtained by reconfiguring the packet sent in step S509. Then, the packet is sent in the broadcast/multicast manner. A PREV identifier carried in the packet sent by the UE 3 is the identifier of the UE 3, a NEXT identifier is the destination multicast/broadcast identifier of the UE 2, and a TGT identifier is still the identifier of the final receiving UE.

Specifically, when the UE 3 does not have the routing table for data routing with the final receiving UE, it indicates that the UE 3 cannot perform data sending with the final receiving UE. In this case, the UE 3 may choose to give up further processing. Certainly, the UE 3 may choose to perform further processing, and then search for another UE, so that the UE 1 performs the forward SL communication with the final receiving UE through the UE 2 and the UE 3 as relays.

Step S518: After receiving the packet sent by the UE 3, the UE 4 determines, based on the NEXT identifier in the packet, whether the packet is sent to the UE 4. If the packet is not sent to the UE 4, subsequent operations are terminated; or if the packet is sent to the UE 4, step S519 is performed.

This is the same as step S504: After receiving the packet sent by the UE 3, the UE 4 parses the packet. After obtaining the NEXT identifier, the UE 4 determines whether the NEXT identifier is an identifier corresponding to a broadcast service that the UE 4 has subscribed to (or an identifier corresponding to a multicast service subscribed to by a group to which the UE 4 belongs). If yes, it indicates that the packet is sent to the UE 4. If not, it indicates that the packet is not sent to the UE 4, and then the subsequent operations are terminated. Optionally, the UE 4 may not determine whether the packet is sent to the UE 4, that is, the UE 4 may always consider that the packet is sent to the UE 4. Then, when forwarding is required, the UE 4 performs the forwarding unconditionally.

Step S519: The UE 4 determines, based on an identifier of final receiving UE in the packet sent by the UE 3, whether the UE 4 is the final receiving UE. If the UE 4 is the final receiving UE, the UE 4 performs step S520; or if the UE 4 is not the final receiving UE, that is, if the UE 4 is forwarding UE, steps similar to those for the UE 2 and the UE 3 are performed, and no analysis is required in this case.

This is the same as step S505: The UE 4 parses the packet. After obtaining the TGT identifier, the UE 4 finds, based on the TGT identifier, whether an identifier of the UE 4 is the same as the TGT identifier. If the identifier of the UE 4 is the same as the TGT identifier, it indicates that the UE 4 is the final receiving UE; or if the identifier of the UE 4 is different from the TGT identifier, it indicates that the UE 4 is the forwarding UE.

Step S520: When determining that the UE 4 is final receiving UE, the UE 4 sends a feedback packet to the UE 3.

The feedback packet indicates that the UE 4 is the final receiving UE.

As described in step S506, the feedback packet may be a packet reconstructed by the UE 4, or may be a packet obtained by reconfiguring the packet sent in step S517. Then, the feedback packet is sent to the UE 3.

After receiving the feedback packet, the UE 3 determines that there is the final receiving UE in multicast or broadcast objects in step S517, and may construct a routing table for data routing between the UE 3 and the UE 4, so that the UE 3 can send a data packet to the UE 4.

In this case, because it is considered that the UE 4 is the final receiving UE, a NEXT identifier of the constructed routing table is the identifier of the UE 4 and a TGT identifier is the identifier of the UE 4.

Step S521: The UE 3 sends a feedback packet to the UE 2. The feedback packet indicates that the UE 3 can perform data routing with the UE 4.

As described in step S506, the feedback packet may be a packet reconstructed by the UE 3, or may be a packet obtained by reconfiguring the packet sent in step S509. Then, the feedback packet is sent to the UE 2. The packet may be a fourth packet.

After receiving the feedback packet, the UE 2 may construct a routing table for data routing between the UE 2 and the UE 3, so that the UE 2 can send a data packet to the UE 3.

In this case, a NEXT identifier of the constructed routing table is the identifier of the UE 3, and a TGT identifier is the identifier of the UE 4.

Step S522: The UE 2 sends a feedback packet to the UE 1. The feedback packet indicates that the UE 2 can perform data routing with the UE 4.

As described in step S506, the feedback packet may be a packet reconstructed by the UE 2, or may be a packet obtained by reconfiguring the packet sent in step S503. Then, the feedback packet is sent to the UE 1.

After receiving the feedback packet, the UE 1 may construct a routing table for data routing between the UE 1 and the UE 2, so that the UE 1 can send a data packet to the UE 2.

In this case, a NEXT identifier of the constructed routing table is the identifier of the UE 2, and a TGT identifier is the identifier of the UE 4.

The packet may be a second packet.

In this embodiment of this application, when forward SL communication between sending UE and receiving UE is established, at least one forwarding UE is added therebetween, so that the sending UE can send data to the receiving UE.

The following describes, from perspectives of routing table change and packet change, a process in which the UE 1 and the UE 4 perform the forward SL communication in this embodiment of this application.

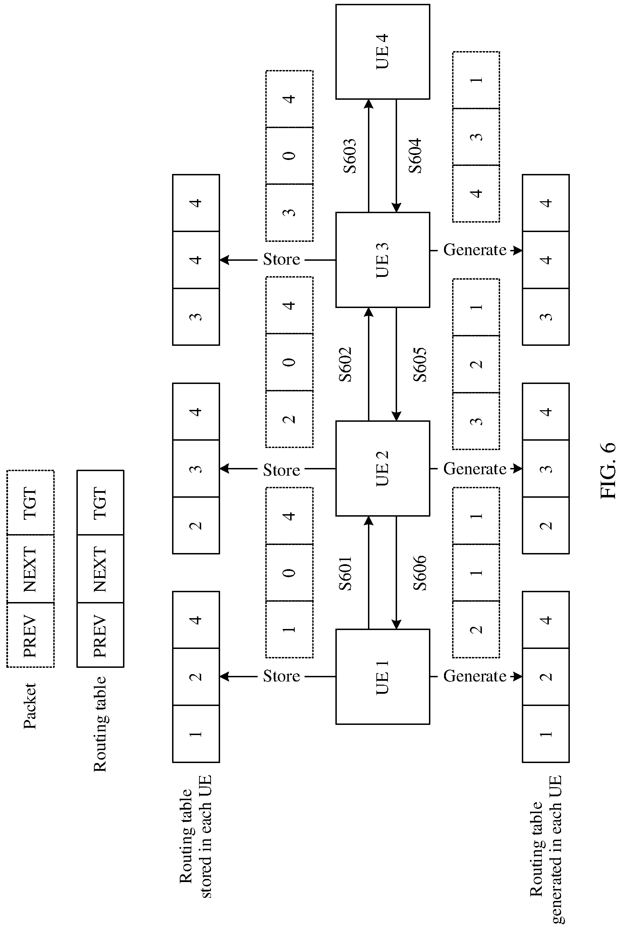

FIG. 6 is a schematic diagram of an architecture of routing table change and packet change in an SL communication process in a UE-to-UE forwarding system according to an embodiment of this application. As shown in FIG. 6, two forwarding UEs are still used as an example in this embodiment of this application. UE 1 is the sending UE, UE 2 and UE 3 are the forwarding UEs, and UE 4 is receiving UE. SL communication constructed from the UE 1 to the UE 4 is described. It is specified that an identifier of the UE 1 is represented by "1", an identifier of the UE 2 is represented by "2", an identifier of the UE 3 is represented by "3", an identifier of the UE 4 or an identifier of receiving UE is represented by "4", and a destination multicast or broadcast identifier is represented by "0" (where it may be understood that the destination multicast identifier and the destination broadcast identifier may be different).

For the UE 1, the UE 1 first queries whether the UE 1 has a routing table for data routing with the UE 4. The found routing table may be (PREV: 1, NEXT: 2, TGT: 4).

Step S601: If it is determined that the UE 1 does not have the routing table to the UE 4, the UE 1 sends a packet to the UE 2 in a multicast/broadcast manner. Identifiers carried in the packet include [PREV: 1, NEXT: 0, TGT: 4].

For the UE 2, after receiving the packet sent by the UE 1, the UE 2 first queries whether the UE 2 has a routing table for data routing with the UE 4. The routing table may be (PREV: 2, NEXT: 3, TGT: 4).

Step S602: If it is determined in S601 that the UE 2 does not have a routing table to the UE 3, the UE 2 sends a packet to the UE 3 in the multicast/broadcast manner. Identifiers carried in the packet include [PREV: 2, NEXT: 0, TGT: 4].

For the UE 3, after receiving the packet sent by the UE 2, the UE 3 first queries whether the UE 3 has a routing table for data routing with the UE 4. The found routing table may be (PREV: 3, NEXT: 4, TGT: 4).

Step S603: If it is determined in S602 that the UE 3 does not have a routing table to the UE 4, the UE 3 sends a packet to the UE 4 in the multicast/broadcast manner. Identifiers carried in the packet include [PREV: 3, NEXT: 0, TGT: 4].

Step S604: When the UE 4 determines, based on the received packet, that the UE 4 is final receiving UE, because NEXT in the packet sent in step S603 is the broadcast/multicast identifier, optionally, the UE 4 sends a packet to the UE 3. Identifiers carried in the packet include [PREV: 4, NEXT: 3, TGT: 1].

For the UE 3, after receiving the packet sent by the UE 4, the UE 3 constructs a routing table for data routing with the UE 4. A format of the constructed routing table is (PREV: 3, NEXT: 4, TGT: 4).

Step S605: After determining that the UE 3 can perform data routing with the UE 4, because NEXT in the packet sent in step S602 is the broadcast/multicast identifier, optionally, the UE 3 sends a packet to the UE 2. Identifiers carried in the packet include [PREV: 3, NEXT: 2, TGT: 1].

For the UE 2, after receiving the packet sent by the UE 3, the UE 2 may construct a routing table for data routing with the UE 4. The constructed routing table may be (PREV: 2, NEXT: 3, TGT: 4).

Step S606: After determining that the UE 2 can perform data routing with the UE 4, because NEXT in the packet sent in step S601 is the broadcast/multicast identifier, optionally, the UE 2 sends a packet to the UE 1. Identifiers carried in the packet include [PREV: 2, NEXT: 1, TGT: 1].

For the UE 1, after receiving the packet sent by the UE 2, the UE 1 may construct a routing table for data routing with the UE 2. The constructed routing table is (PREV: 1, NEXT: 2, TGT: 4).

Optionally, if the routing table already exists, the routing table does not need to be reconstructed or added, and a format of the routing table may include one or more of a PREV identifier, a NEXT identifier, and a TGT identifier.

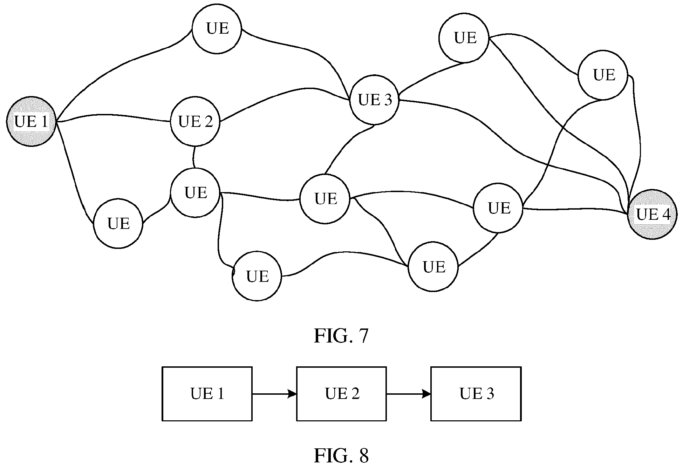

It should be noted herein that, in this application, an example in which the UE 1 is the sending UE, the UE 2 and the UE 3 are the forwarding UEs, and the UE 4 is the receiving UE is used. However, according to the foregoing descriptions, manners in which the UE 1 sends the packet to the UE 2, the UE 2 sends the packet to the UE 3, and the UE 3 sends the packet to the UE 4 may be the broadcast manner and the multicast manner. Therefore, a person skilled in the art may know that, in a process of establishing SL communication between the UE 1 and the UE 4, connection links are not limited to the foregoing connection link "UE 1→UE 2→UE 3→UE 4", but may alternatively be that shown in FIG. 7. There may be a plurality of connection links between the UE 1 and the UE 4. That is, each routing table may include a plurality of entries. For example, NEXT may include a plurality of options.

### Embodiment 2

FIG. 8 is a schematic diagram of an SL communication architecture in a UE-to-UE forwarding system according to an embodiment of this application. As shown in FIG. 8, in a process in which UE 1 passively receives data (where it is specified that the process is reverse SL communication), two forwarding UEs are used as an example in this application to describe establishment of the reverse SL communication for the UE 1. The UE 1 is receiving UE, and UE 2 and UE 3 are forwarding UEs.

For the UE 1, when determining that a data packet from another UE is required, in a process of actively initiating the reverse SL communication to the another UE, the UE 1 sends a packet to the another UE in a multicast or broadcast manner, to search for sending UE that can send a data packet to the UE 1.

The UE 2 is one of other UEs to which the UE 1 sends the packet in the multicast or broadcast manner. After receiving the packet sent by the UE 1, the UE 2 queries whether the UE 2 has a routing table that can be used for data routing with the UE 1. If the UE 2 has the routing table that can be used for data routing with the UE 1, the UE 2 terminates subsequent operations and waits for subsequent data packet sending. If the UE 2 does not have the routing table that can be used for data routing with the UE 1, the UE 2 constructs, based on the packet, the routing table that can be used for data routing with the UE 1, to subsequently send a data packet to the UE 1.

After the UE 2 has the routing table for sending data to the UE 1, if the UE 2 intends to enable more other UEs to send data to the UE 1, the UE 2 may further choose to send a packet in the multicast/broadcast manner, so that the other UEs send the data to the UE 1 through forwarding by the UE 2.

The UE 3 is one of other UEs to which the UE 2 sends the packet in the multicast or broadcast manner. After receiving the packet sent by the UE 2, the UE 3 queries whether the UE 3 has a routing table that can be used for data routing with the UE 1. If the UE 3 has the routing table that can be used for data routing with the UE 1, the UE 3 terminates subsequent operations and waits for subsequent data packet sending. If the UE 3 does not have the routing table that can be used for data routing with the UE 1, the UE 3 constructs, based on the packet, a routing table that can be used for data routing with the UE 2, so that the UE 3 subsequently sends a data packet to the UE 1 through the UE 2.

After the UE 3 has the routing table for sending data to the UE 1, if the UE 3 intends to enable more other UEs to send data to the UE 1, the UE 3 may further choose to send a packet in the multicast/broadcast manner, so that the other UEs send the data to the UE 1 through forwarding by the UE 2 and the UE 3.

A process performed by subsequent UE is basically the same as that performed by the UE 3, and details are not described herein.

Optionally, to avoid excessive network load caused by excessive broadcast messages, a forwarding threshold may be defined. To be specific, each forwarding UE first determines whether a quantity of forwarding times is greater than or equal to the threshold before forwarding, and if the quantity of forwarding times reaches the specified forwarding threshold, discards a packet, or if the quantity of forwarding times does not reach the specified threshold, increases the quantity of forwarding times by 1, and forwards a packet in the broadcast/multicast manner again. Similarly, the forwarding UE may alternatively decrease the quantity of forwarding times by 1 and determine, depending on whether the quantity of forwarding times is less than or equal to 0, whether forwarding can continue.

In this embodiment of this application, when the reverse SL communication is established for the receiving UE, a packet is sent to corresponding UE, so that the corresponding UE constructs a reverse routing table and the UE constructs the reverse SL communication with the receiving UE. If more UEs need to perform the reverse SL communication with the receiving UE, UE that has performed the reverse SL communication with the receiving UE may further send a packet, so that the UE serves as relay UE, and more other UEs perform the reverse SL communication with the receiving UE.

The following uses the UE 2 as an example to describe, by using a flowchart, a process in which the UE 1 and the UE 2 perform the reverse SL communication in this embodiment of this application.

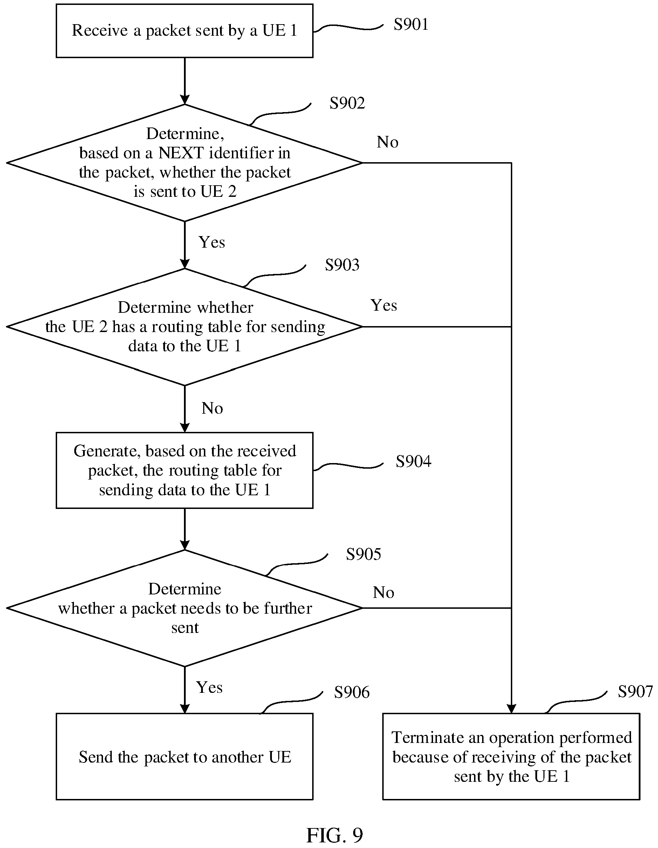

FIG. 9 is a schematic flowchart of reverse SL communication between UE 1 and UE 2 in a UE-to-UE forwarding system according to an embodiment of this application. As shown in FIG. 9, a working process of the UE 2 is as follows.

Step S901: The UE 2 receives a packet sent by the UE 1.

In this embodiment of this application, a packet that is sent by the UE 1 to another UE and that is used to perform the reverse SL communication generally carries one or more of a PREV identifier, a NEXT identifier, and an SRC identifier. The PREV identifier is an identifier of UE that sends the packet, the NEXT identifier is an identifier of UE that receives the packet, and the SRC identifier is an identifier of UE that initially sends a packet to receive a data packet sent by another UE. The SRC identifier may also be referred to as an initial identifier.

If the UE 1 sends the packet in a multicast or broadcast manner, the PREV identifier carried in the packet is an identifier of the UE 1, the NEXT identifier is a destination multicast/broadcast identifier, and the SRC identifier is the identifier of the UE 1. The destination multicast identifier is an identifier corresponding to a same multicast service subscribed to by a same group, and the destination broadcast identifier is an identifier corresponding to a same broadcast service subscribed to.

Step S902: The UE 2 determines, based on the NEXT identifier in the packet, whether the packet is sent to the UE 2. If the packet is sent to the UE 2, step S903 is performed; or if the packet is not sent to the UE 2, step S907 is performed.

Specifically, after receiving the packet sent by the UE 1, the UE 2 parses the packet. After obtaining the NEXT identifier, the UE 2 determines whether the NEXT identifier is an identifier corresponding to a broadcast service that the UE 2 has subscribed to (or an identifier corresponding to a multicast service subscribed to by a group to which the UE 2 belongs). If yes, it indicates that the packet is sent to the UE 2. If not, it indicates that the packet is not sent to the UE 2, and then subsequent operations are terminated.

Step S903: The UE 2 determines whether the UE 2 has a reverse routing table for data routing with the UE 1. If the UE 2 does not have the reverse routing table for data routing with the UE 1, the UE 2 performs step S904; or if the UE 2 has the reverse routing table for data routing with the UE 1, the UE 2 performs step S907.

In this embodiment of this application, for the another UE, in a process of sending a data packet to the UE 1, a reverse routing table that is used to determine next-hop UE to which the data packet is forwarded includes a PREV identifier (optional), a NEXT identifier, and a TGT identifier. The PREV identifier indicates that the data packet is sent from the identifier. The NEXT identifier is used to determine the next-hop UE to which the data packet is sent. The TGT identifier is used to determine UE that finally receives the data packet.

For example, the UE 2 continues to parse the packet. After obtaining the SRC identifier, the UE 2 queries, based on the identifier of the UE 1, TGT identifiers in all routing tables stored in the UE 2, and determines whether any TGT identifier in all the routing tables is the same as the identifier of the UE 1. If any TGT identifier in all the routing tables is the same as the identifier of the UE 1, it indicates that the UE 2 has the reverse routing table for data routing with the UE 1; or if no TGT identifier in all the routing tables is the same as the identifier of the UE 1, it indicates that the UE 2 does not have the reverse routing table for data routing with the UE 1.

Step S904: The UE 2 generates, based on the received packet, the reverse routing table for data routing with the UE 1.

Specifically, the UE 2 may choose to perform further processing, and construct, based on the PREV identifier and the SRC identifier in the packet received from the UE 1, the reverse routing table for data routing with the UE 1, so that the UE 2 subsequently sends a data packet to the UE 1. In the constructed reverse routing table, a PREV identifier is an identifier of the UE 2, a NEXT identifier is the identifier of the UE 1, and a TGT identifier is the identifier of the UE 1.

Step S905: The UE 2 determines whether a packet needs to be further sent. If a packet needs to be further sent, step S906 is performed; or if no packet needs to be further sent, step S907 is performed.

Specifically, after the UE 2 has the reverse routing table for sending data to the UE 1, if the UE 2 intends to enable more other UEs to send data to the UE 1, the UE 2 may further choose to send the packet in the multicast/broadcast manner, so that the other UEs send the data to the UE 1 through the UE 2 as a relay. Optionally, before sending the packet in the multicast/broadcast manner, the UE 2 may first determine whether a quantity of forwarding times is greater than or equal to a threshold. If the quantity of forwarding times reaches the specified forwarding threshold, the UE 2 does not send the packet. If the quantity of forwarding times does not reach the specified threshold, the UE 2 performs broadcast/multicast forwarding, and may further increase the quantity of forwarding times by 1. Similarly, a threshold may alternatively be preset. Each time a packet is sent in the multicast/broadcast manner, an operation of decreasing a quantity of forwarding times by 1 is performed, and whether forwarding can continue is determined depending on whether the quantity of forwarding times is less than or equal to 0. The quantity of forwarding times may be carried in packets received and sent by the UE 2. The quantity of forwarding times may be a quantity of multicast/broadcast times of UE, or may be a quantity of multicast/broadcast times of a forwarding system caused by multicast/broadcast of the UE 1.

Step S906: The UE 2 sends the packet to another UE in the multicast or broadcast manner.

The packet may be a packet reconstructed by the UE 2, or may be a packet obtained by reconfiguring the packet sent in step S901 in a manner of setting the PREV identifier from the identifier of the UE 1 to the identifier of the UE 2 and setting the NEXT identifier from the destination multicast/broadcast identifier to a destination multicast/broadcast identifier of the UE 2. Then, the packet is sent in the broadcast/multicast manner.

Step S907: The UE 2 terminates an operation performed because of receiving of the packet sent by the UE 1.

In this embodiment of this application, when reverse SL communication is established for receiving UE, a packet is sent to corresponding UE, so that the corresponding UE constructs a reverse routing table and the UE constructs the reverse SL communication with the receiving UE. If the receiving UE expects more UEs to perform the reverse SL communication with the receiving UE, the receiving UE may enable UE that has performed the reverse SL communication with the receiving UE to further send a packet, so that the UE serves as relay UE, and more other UEs perform the reverse SL communication with the receiving UE.

The following describes, from perspectives of routing table change and packet change, a process in which the UE 1 performs the reverse SL communication in this embodiment of this application.

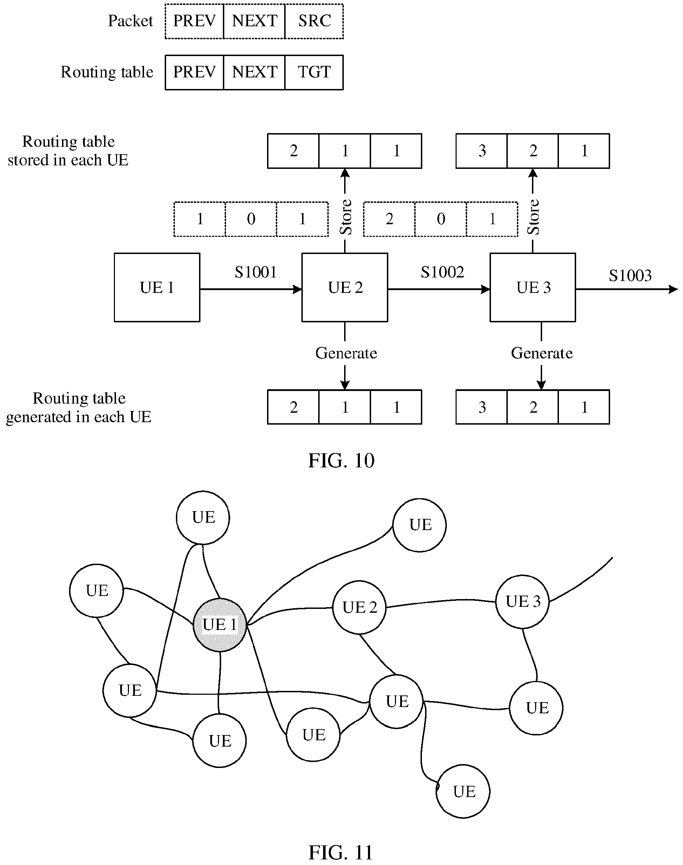

FIG. 10 is a schematic diagram of an architecture of routing table change and packet change in an SL communication process in a UE-to-UE forwarding system according to an embodiment of this application. As shown in FIG. 10, in this embodiment of this application, two forwarding UEs are still used as an example to describe establishment of reverse SL communication for UE 1. It is specified that an identifier of the UE 1 is represented by "1", an identifier of UE 2 is represented by "2", an identifier of UE 3 is represented by "3", and a destination multicast/broadcast identifier is represented by "0".

Step S1001: In a process of sending a packet to the UE 2, the UE 1 sends the packet to the UE 2 in a multicast/broadcast manner, where identifiers carried in the packet include [PREV: 1, NEXT: 0, SRC: 1].

For the UE 2, after receiving the packet sent by the UE 1, the UE 2 first queries whether the UE 2 has a reverse routing table for data routing with the UE 1. The found prestored reverse routing table may be (PREV: 2, NEXT: 1, TGT: 1) or (NEXT: 1, TGT: 1). If no reverse routing table is found, the reverse routing table may be generated based on the received packet.

(Optional) Step S1002: The UE 2 may send a packet to the UE 3 in the multicast/broadcast manner, where identifiers carried in the packet include [PREV: 2, NEXT: 0, SRC: 1].

For the UE 3, after receiving the packet sent by the UE 2, the UE 3 first queries whether the UE 3 has a reverse routing table for data routing with the UE 1. The found prestored reverse routing table may be (PREV: 3, NEXT: 2, TGT: 1) or (NEXT: 2, TGT: 1). If no reverse routing table is found, the reverse routing table may be generated based on the received packet.

It should be noted herein that, in this application, an example in which the UE 1 is sending UE is used. However, according to the foregoing descriptions, manners in which the UE 1 sends the packet to the UE 2 and the UE 2 sends the packet to the UE 3 may be the broadcast manner and the multicast manner. Therefore, a person skilled in the art may know that the UE 1 may be finally connected to more other UEs, to form a plurality of reverse connection links.

For example, in a process in which the UE 1 performs the SL communication, connection links are not limited to the foregoing connection link "UE 1←UE 2←UE 3", but may alternatively be that shown in FIG. 11. The UE 1 may be connected to more other UEs, to form a plurality of connection links.

In addition, as mentioned above, the manner in which the UE 1 sends the packet and the UE 2 sends the packet is the broadcast or multicast manner. For a process of constructing a reverse routing table, the manners in which the UE 1 sends the packet to the UE 2 and the UE 2 sends the packet to the UE 3 may alternatively be a unicast manner. When the UE 1 sends a packet to the UE 2 in the unicast manner, the UE 2 cannot determine whether a reverse routing table is constructed between the UE 2 and the UE 1. Therefore, indication information indicating to construct the reverse routing table further needs to be included in a unicast packet.

### Embodiment 3

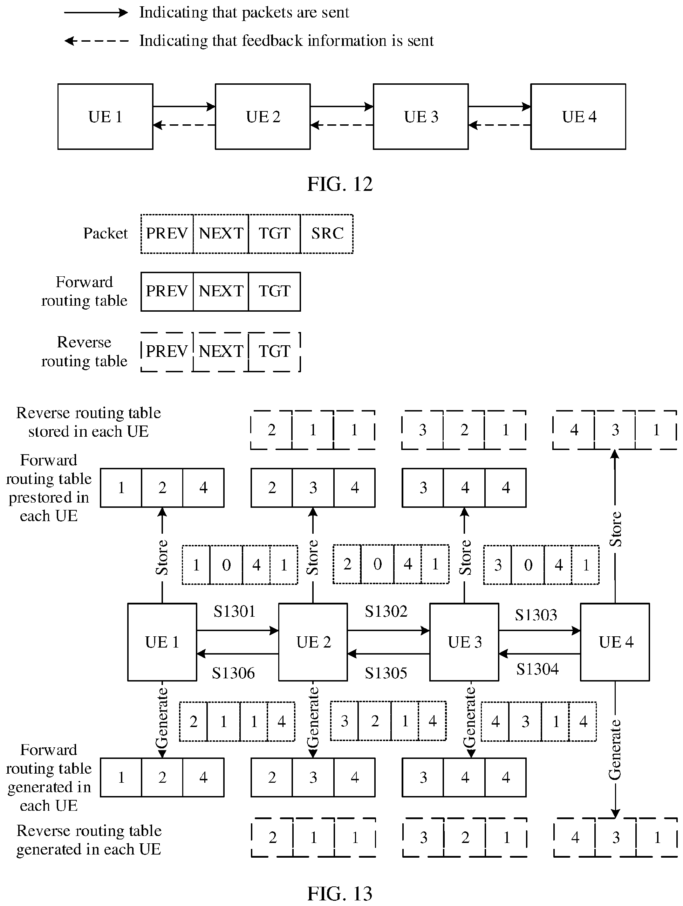

FIG. 12 is a schematic diagram of an SL communication architecture in a UE-to-UE forwarding system according to an embodiment of this application. As shown in FIG. 12, in a process in which UE 1 sends data for the first time, in this application, two forwarding UEs are used as an example to describe dual-forward SL communication between the UE 1 and UE 4. The UE 1 is sending UE, UE 2 and UE 3 are forwarding UEs, and the UE 4 is receiving UE. It is specified that data routing performed by the UE 1 to the UE 4 is forward SL communication, and data routing performed by the UE 2, the UE 3, and the UE 4 to the UE 1 is reverse SL communication.

For the UE 1, in a process of performing bidirectional SL communication with the UE 4, the UE 1 sends a packet to another UE in a multicast or broadcast manner, to search for the UE 4, and to construct a forward routing table and a reverse routing table between the UE 1 and the UE 4.

In this case, an identifier carried in the packet sent by the UE 1 includes one or more of a PREV identifier, a NEXT identifier, a TGT identifier, and an SRC identifier. The PREV identifier is an identifier of the UE 1, the NEXT identifier is a destination multicast/broadcast identifier, the TGT identifier is an identifier of the UE 4, and the SRC identifier is the identifier of the UE 1.

The UE 2 is one of other UEs to which the UE 1 sends the packet in the multicast or broadcast manner. After receiving the packet, the UE 2 parses the packet. After obtaining the packet, the UE 2 determines, based on the NEXT identifier, whether the packet is sent to the UE 2. After determining that the packet is sent to the UE 2, the UE 2 determines, based on the TGT identifier, whether the UE 2 is final receiving UE. When determining that the UE 2 is not the final UE, the UE 2 sends a packet to another UE in the multicast or broadcast manner.

The packet sent by the UE 2 to the another UE may be a packet reconstructed by the UE 2, or may be a packet obtained by reconfiguring the packet sent by the UE 1 in a manner of setting the PREV identifier from the identifier of the UE 1 to an identifier of the UE 2 and setting the NEXT identifier from the destination multicast/broadcast identifier to a destination multicast/broadcast identifier of the UE 2 (or the NEXT identifier may remain unchanged). Then, the packet is sent in the broadcast/multicast manner.

Optionally, the UE 2 determines, based on the TGT identifier, whether the UE 2 has a forward routing table for data routing with the UE 4. If the UE 2 has the forward routing table for data routing with the UE 4, the UE 2 sends a feedback packet to the UE 1, so that the UE 1 subsequently constructs a forward routing table with the UE 2.

Optionally, the UE 2 determines, based on the SRC identifier, whether the UE 2 has a reverse routing table for data routing with the UE 1. If the UE 2 does not have the reverse routing table for data routing with the UE 1, the UE 2 records the one or more of the PREV identifier, the NEXT identifier, the TGT identifier, and the SRC identifier in the received packet.

The UE 3 is one of other UEs to which the UE 2 sends the packet in the multicast or broadcast manner. After receiving the packet, the UE 3 parses the packet. After obtaining the packet, the UE 3 determines, based on the NEXT identifier, whether the packet is sent to the UE 3. After determining that the packet is sent to the UE 3, the UE 3 determines, based on the TGT identifier, whether the UE 3 is the final receiving UE. When determining that the UE 2 is not the final UE, the UE 3 sends a packet to another UE in the multicast or broadcast manner.

The packet sent by the UE 3 to the another UE may be a packet reconstructed by the UE 3, or may be a packet obtained by reconfiguring the packet sent by the UE 2 in a manner of setting the PREV identifier from the identifier of the UE 2 to an identifier of the UE 3 and setting the NEXT identifier from the destination multicast/broadcast identifier to a destination multicast/broadcast identifier of the UE 3. Then, the packet is sent in the broadcast/multicast manner.

Optionally, the UE 3 determines, based on the TGT identifier, whether the UE 3 has a forward routing table for data routing with the UE 4. If the UE 3 has the forward routing table for data routing with the UE 4, the UE 3 sends a feedback packet to the UE 2, so that the UE 2 subsequently constructs a forward routing table with the UE 3.

Optionally, the UE 3 determines, based on the SRC identifier, whether the UE 3 has a reverse routing table for data routing with the UE 2. If the UE 3 does not have the reverse routing table for data routing with the UE 2, the UE 3 records one or more of the PREV identifier, the NEXT identifier, the TGT identifier, and the SRC identifier in the received packet.

The UE 4 is one of other UEs to which the UE 3 sends the packet in the multicast or broadcast manner. After receiving the packet, the UE 4 parses the packet. After obtaining the packet, the UE 4 determines, based on the NEXT identifier, whether the packet is sent to the UE 4. After determining that the packet is sent to the UE 4, the UE 4 determines, based on the TGT identifier, whether the UE 4 is the final receiving UE. When determining that the UE 4 is the final UE, the UE 4 determines, based on the SRC identifier, whether the UE 4 has a reverse routing table for data routing with the UE 1, and if the UE 4 does not have the reverse routing table, constructs the reverse routing table based on the packet.

Optionally, when NEXT in the packet sent by the UE 3 to the UE 4 is the broadcast/multicast identifier, the UE 4 may send a feedback packet to the UE 3. The feedback packet may be a packet newly generated by the UE 4, or may be a packet obtained by modifying the packet sent by the UE 3. Then, the feedback packet is forwarded to the UE 3. The feedback packet still includes one or more of the PREV identifier, the NEXT identifier, the TGT identifier, and the SRC identifier. In this case, the PREV identifier is the identifier of the UE 4, the NEXT identifier is the identifier of the UE 3, the TGT identifier is the identifier of the UE 1, and the SRC identifier is the identifier of the UE 4.

A time point at which a reverse routing table is constructed may be after a time point at which a packet sent by a previous hop is received, or may be after a time point at which a feedback message sent by a next hop is received. A detailed example is as follows.

After receiving the feedback packet, the UE 3 constructs a forward route to the UE 4 based on the PREV identifier and the SRC identifier. In addition, if the UE 3 does not construct the reverse routing table with the UE 2 before sending the packet in the multicast/broadcast manner, the UE 3 may construct the reverse routing table with the UE 2 based on the recorded PREV identifier in the packet sent by the UE 2 and the TGT identifier in the feedback packet currently received from the UE 4, or may construct the reverse routing table with the UE 2 based on the recorded PREV identifier and SRC identifier in the packet sent by the UE 2. Finally, the UE 3 sends the feedback packet to the UE 2.

Similarly, after receiving the feedback packet, the UE 2 constructs a forward route to the UE 3 based on the PREV identifier and the SRC identifier. In addition, if the UE 2 does not construct the reverse routing table with the UE 1 before sending the packet in the multicast/broadcast manner, the UE 2 may construct the reverse routing table with the UE 1 based on the recorded PREV identifier in the packet sent by the UE 1 and the TGT identifier in the feedback packet currently received from the UE 3, or may construct the reverse routing table with the UE 1 based on the recorded PREV identifier and SRC identifier in the packet sent by the UE 1. Finally, the UE 2 sends the feedback packet to the UE 1.

Similarly, after receiving the feedback packet, the UE 1 constructs a forward route to the UE 2 based on the PREV identifier and the SRC identifier.

In this embodiment of this application, when SL communication cannot be implemented between UEs due to a hardware capability, a distance, external interference, or the like, the UE-to-UE forwarding system is introduced. To be specific, at least one forwarding UE is added between sending UE and receiving UE, and then a forward routing table and a reverse routing table for data transmission between the sending UE and forwarding UE, between forwarding UEs, and between the forwarding UE and the receiving UE is constructed, so that data can be mutually transmitted between the sending UE and the receiving UE.

The following describes, from perspectives of routing table change and packet change, the process in which the UE 1 and the UE 4 perform the bidirectional SL communication in this embodiment of this application.

FIG. 13 is a schematic diagram of an architecture of routing table change and packet change in an SL communication process in a UE-to-UE forwarding system according to an embodiment of this application. As shown in FIG. 13, two forwarding UEs are still used as an example in this embodiment of this application. UE 1 is sending UE, UE 2 and UE 3 are the forwarding UEs, and UE 4 is receiving UE. It is specified that an identifier of the UE 1 is represented by "1", an identifier of the UE 2 is represented by "2", an identifier of the UE 3 is represented by "3", an identifier of the UE 4 or an identifier of the receiving UE is represented by "4", and a destination multicast/broadcast identifier is represented by "0".

For the UE 1, the UE 1 first determines whether the UE 1 has a forward routing table for data routing with the UE 4. The found prestored forward routing table may be (PREV: 1, NEXT: 2, TGT: 4) or (NEXT: 2, TGT: 4).

Step S1301: When the UE 1 determines that there is no routing table to the UE 4, the UE 1 may send a packet to the UE 2 in a multicast/broadcast manner. Identifiers carried in the packet include [PREV: 1, NEXT: 0, TGT: 4, SRC: 1].

For the UE 2, after receiving the packet sent by the UE 1, the UE 2 queries whether the UE 2 has a forward routing table for data routing with the UE 4. The found prestored forward routing table may be (PREV: 2, NEXT: 3, TGT: 4) or (PREV: 2, NEXT: 3, TGT: 4). In addition, the UE 2 may further query whether the UE 2 has a reverse routing table for data routing with the UE 1. If the reverse routing table does not exist, the reverse routing table may be generated. The reverse routing table is (PREV: 2, NEXT: 1, TGT: 1) or (NEXT: 1, TGT: 1).

Step S1302: If it is determined in S1301 that the UE 2 does not have a routing table to the UE 3, the UE 2 may send a packet to the UE 3 in the multicast/broadcast manner. Identifiers carried in the packet include [PREV: 2, NEXT: 0, TGT: 4, SRC: 1].

For the UE 3, after receiving the packet sent by the UE 2, the UE 3 queries whether the UE 3 has a forward routing table for data routing with the UE 4. The found prestored forward routing table may be (PREV: 3, NEXT: 4, TGT: 4) or (NEXT: 4, TGT: 4). In addition, the UE 3 may further query whether the UE 3 has a reverse routing table for data routing with the UE 1. If the reverse routing table does not exist, the reverse routing table may be generated. The reverse routing table is (PREV: 3, NEXT: 2, TGT: 1) or (NEXT: 2, TGT: 1).

Step S1303: If it is determined in S1302 that the UE 3 does not have a routing table to the UE 4, the UE 3 sends a packet to the UE 4 in the multicast/broadcast manner. Identifiers carried in the packet include [PREV: 3, NEXT: 0, TGT: 4, SRC: 1].

For the UE 4, after receiving the packet sent by the UE 3, the UE 4 may query whether the UE 4 is final receiving UE. In addition, the UE 4 may query whether the UE 4 has a reverse routing table for data routing with the UE 1, and if the UE 4 does not have the reverse routing table for data routing with the UE 1, generate the reverse routing table. The reverse routing table is (PREV: 4, NEXT: 3, TGT: 1) or (NEXT: 3, TGT: 1).

Step S1304: When the UE 4 determines that the UE 4 is the final receiving UE, because NEXT in the packet sent in step S1303 is the broadcast/multicast identifier, optionally, the UE 4 sends a feedback packet to the UE 3. Identifiers carried in the packet include [PREV: 4, NEXT: 3, TGT: 1, SRC: 4].

For the UE 3, after receiving the packet sent by the UE 4, the UE 3 constructs a forward routing table for data routing with the UE 4. The forward routing table is (PREV: 3, NEXT: 4, TGT: 4) or (NEXT: 4, TGT: 4). If no reverse routing table is generated in step S1303, a reverse routing table for data routing with the UE 2 may alternatively be constructed. The reverse routing table is (PREV: 3, NEXT: 2, TGT: 1) or (NEXT: 4, TGT: 4).

Step S1305: After the UE 3 determines that the UE 3 can perform data routing with the UE 4, because NEXT in the packet sent in step S1302 is the broadcast/multicast identifier, optionally, the UE 3 sends a packet to the UE 2. Identifiers carried in the packet include [PREV: 3, NEXT: 2, TGT: 1, SRC: 4].

For the UE 2, after receiving the packet sent by the UE 3, the UE 2 constructs a forward routing table for data routing with the UE 3. The forward routing table is (PREV: 2, NEXT: 3, TGT: 4) or (NEXT: 3, TGT: 4). If no reverse routing table is generated in step S1301, the reverse routing table for data routing with the UE 1 may alternatively be constructed. The reverse routing table is (PREV: 2, NEXT: 1, TGT: 1) or (NEXT: 1, TGT: 1).

Step S1306: After the UE 2 determines that the UE 2 can perform data routing with the UE 4, because NEXT in the packet sent in step S1301 is the broadcast/multicast identifier, optionally, the UE 2 sends a packet to the UE 2. Identifiers carried in the packet include [PREV: 2, NEXT: 1, TGT: 1, SRC: 4].

For the UE 1, after receiving the packet sent by the UE 2, the UE 1 constructs a forward routing table for data routing with the UE 2. The forward routing table is (PREV: 1, NEXT: 2, TGT: 4) or (NEXT: 2, TGT: 4).

It should be noted herein that, in this application, an example in which the UE 1 is the sending UE, the UE 2 and the UE 3 are the forwarding UEs, and the UE 4 is the receiving UE is used. However, according to the foregoing descriptions, manners in which the UE 1 sends the packet to the UE 2, the UE 2 sends the packet to the UE 3, and the UE 3 sends the packet to the UE 4 may be the broadcast manner or the multicast manner. Therefore, a person skilled in the art may know that, in a process of establishing the SL communication between the UE 1 and the UE 4, connection links are not limited to the foregoing connection link "UE 1→UE 2→UE 3→UE 4". Alternatively, there may be a plurality of connection links between the UE 1 and the UE 4.

The following describes, by using four embodiments, that in a process in which SL communication is performed between sending UE and receiving UE, forwarding UE forwards data in different manners based on different identifiers in the forwarding UE.

### Embodiment 4

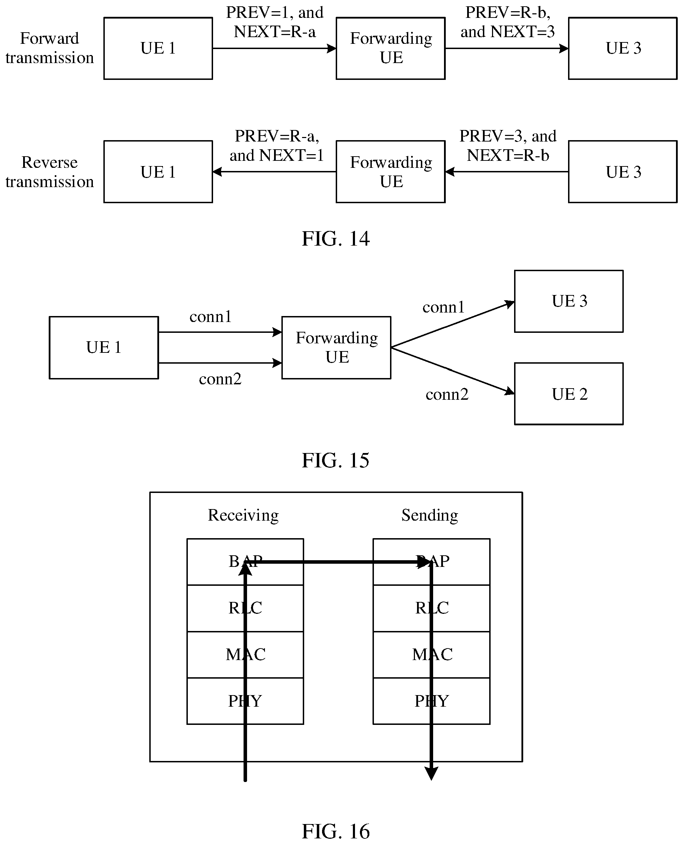

Forwarding UE maintains a pair of L2 IDs (which are assumed to be R-a and R-b) for each SL communication connection. It may be understood that a NEXT identifier in a data packet received by the forwarding UE for an SL communication connection is different from a PREV identifier in a data packet forwarded by the forwarding UE. A communication connection established between UE 1 and UE 3 through the forwarding UE may be used as an SL communication connection. As shown in FIG. 14, the following is included:

In a forward data transmission process, the forwarding UE receives a data packet (where a PREV identifier is an identifier <PREV=1> of the UE 1 and a NEXT identifier is the identifier <NEXT=R-a> of the forwarding UE) sent by the UE 1 (sending UE), and then forwards the data packet to the UE 3 (receiving UE) (where a PREV identifier is an identifier <PREV=R-b> of the forwarding UE, and a NEXT identifier is an identifier <NEXT=3> of the UE 3).

In a reverse data transmission process, the forwarding UE receives a data packet (where a PREV identifier is an identifier <PREV=3> of the UE 3, and a NEXT identifier is the identifier <NEXT=R-b> of the forwarding UE) sent by the UE 3, and then forwards the data packet to the UE 1 (where a PREV identifier is the identifier <PREV=R-a> of the forwarding UE, and a NEXT identifier is an identifier <NEXT=1> of the UE 1).

For example, a case in which the forwarding UE simultaneously serves a plurality of SL communication connections may be that shown in FIG. 15. The forwarding UE serves both an SL communication connection 1 between the UE 1 and the UE 3 and an SL communication connection 2 between the UE 1 and UE 2. In addition, each SL communication connection has one or more SL bearers/logical channels (logical channels, LCHs) that are used to send data packets of different quality of service (quality of service, QoS). It is assumed that the SL communication connection 1 has two LCHs, and the SL communication connection 2 has only one LCH. Each LCH may correspond to one RLC entity, but different LCHs of a same connection share one MAC entity. The MAC entity herein maintains a whole set of independent LCHs for different connections in the SL communication. The MAC logical entity is bound to/associated with PREV L2 ID+NEXT L2 ID of both parties in the SL communication, and MAC logical entities in different combinations of PREV L2 ID+NEXT L2 ID are different. There may be one or more physical MAC entities for a plurality of MAC logical entities. It may also be considered that PREV L2 ID+NEXT L2 ID identifies an SL connection. UE 1-forwarding UE-UE 3 corresponds to conn1, and UE 1-forwarding UE-UE 2 corresponds to conn2.

The forwarding UE may implement mapping of the L2 IDs and conversion between R-a and R-b at a BAP layer.

It is assumed that the UE 1 needs to send a data packet to the UE 3, and a BAP layer of the forwarding UE needs to complete the following two functions, so that data can be routed inside the forwarding UE, and after receiving the data from an SL connection and a bearer that correspond to the UE 1, the forwarding UE sends the data through an SL connection and a bearer that correspond to the UE 3. From a perspective of the forwarding UE, the data is received from PREV+NEXT (UE 1 L2 ID+R_a) and then sent from PREV+NEXT (R_b+UE 3 L2 ID). Therefore, the BAP layer needs to implement the following functions:
1. L2 ID mapping: For example, after receiving the data from the SL connection and the bearer that correspond to the UE 1, the forwarding UE learns, based on a prestored/constructed association relationship, that the data needs to be forwarded to the UE 3. Therefore, the data needs to be mapped to the SL connection and the bearer that correspond to the UE 3. In this case, the forwarding UE obtains, based on a NEXT L2 ID in a received data packet, a PREV L2 ID that needs to be carried in a to-be-sent data packet. In this way, L2 IDs are mapped.
2. L2 ID indication: Optionally, when the received data is mapped to the SL connection and the bearer that correspond to the UE 3, the PREV L2 ID carried in the to-be-sent data packet may be indicated to another layer (for example, a MAC layer), and/or an L2 ID corresponding to the UE 3 may be indicated to another layer (for example, the MAC layer). When sending the data packet, a MAC entity fills the PREV L2 ID in a MAC layer header of the data packet as an L2 ID (R_b) allocated by the forwarding UE to the SL connection, and fills the NEXT L2 ID in the corresponding MAC layer header as the UE 3 L2 ID.

If the UE 3 needs to send a data packet to the UE 1 through the forwarding UE, a process is similar to the foregoing process, except that the L2 ID maintained by the forwarding UE needs to be changed (for example, reverse conversion between R_a and R_b). Details are not described herein again.

For example, an internal processing process of a data packet in the forwarding UE is that shown in FIG. 16. After receiving a data packet through a receiving bearer (where in this case, a sidelink radio bearer (sidelink radio bearer, SL RB) used to receive data may refer to an SL RB of L2 forwarding UE, that is, a PDCP layer may not be included), the forwarding UE needs to perform layer-by-layer parsing (PHY→MAC→RLC→BAP), and finally can deliver the data packet to a BAP layer. If a BAP layer entity determines that the data packet is not a data packet finally sent to the BAP layer entity but a data packet that needs to be forwarded, the BAP entity forwards the data packet through a corresponding sending bearer.

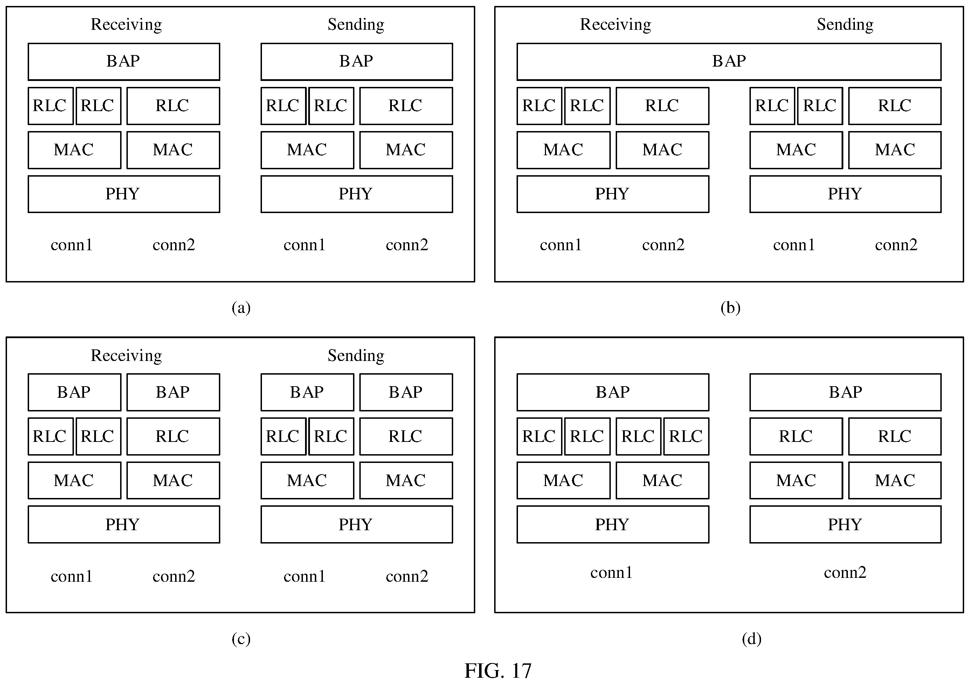

The following uses a BAP model inside the forwarding UE to describe how the forwarding UE forwards a data packet.
1. As shown in FIG. 17(a), the forwarding UE includes one receiving BAP entity and one sending BAP entity. For all SL communication connections associated with the forwarding UE, a receiving BAP entity is shared to receive data packets and a sending BAP entity is shared to send data packets. In an embodiment, that the UE 1 sends a data packet to the UE 3 is used as an example. After receiving the data packet from the receiving BAP entity, the forwarding UE determines that the data packet needs to be forwarded to the UE 3, and directly delivers the data packet to the internal sending BAP entity. The sending BAP entity forwards the data packet to a corresponding SL connection and a corresponding SL bearer (for example, the sending BAP entity may forward the data packet to the corresponding SL connection and the corresponding SL bearer based on the UE 3 L2 ID).
2. As shown in FIG. 17(b), the forwarding UE includes one BAP entity. For all SL communication connections, a BAP entity is used to receive and send data packets. In an embodiment, that the UE 1 sends a data packet to the UE 3 is used as an example. Because a BAP entity is shared for receiving/sending for all connections, after receiving the data packet, the forwarding UE determines, in the BAP entity, whether to forward the data packet to the UE 3, and forwards the data packet to a corresponding SL connection and a corresponding SL bearer.
3. As shown in FIG. 17(c), the forwarding UE includes at least two receiving BAP entities and at least two sending BAP entities. An SL communication connection corresponds to a receiving BAP entity and a sending BAP entity. For an SL communication connection, a data packet is received through a corresponding receiving BAP entity and sent through a corresponding sending BAP entity. In an embodiment, that the UE 1 sends a data packet to the UE 3 is used as an example. Because for each SL connection, there is a corresponding receiving/sending BAP entity for receiving/sending, after receiving the data packet, an SL bearer/an LCH that is of the forwarding UE and that corresponds to the UE 1 delivers the data packet to a receiving BAP entity bound to the bearer at an upper layer. The receiving BAP entity corresponding to the connection needs to determine UE to which the data packet needs to be further forwarded, so that internal routing is performed in a sending BAP entity of a connection corresponding to next-hop UE (the UE 3).
4. As shown in FIG. 17(d), the forwarding UE includes at least two BAP entities. For each SL communication connection, a BAP entity is used to receive and send data packets. In an embodiment, that the UE 1 sends a data packet to the UE 3 is used as an example. Because a same BAP entity is used in a same SL communication connection, and different receiving/sending SL bearers (or LCHs) in the connection share the BAP entity, after the forwarding UE receives data, the BAP entity directly routes the data to a sending bearer associated with the same BAP entity for sending, so that the data is routed in the forwarding UE.

In this embodiment of this application, the forwarding UE maintains a pair of L2 IDs for each SL forwarding connection. The BAP layer is added, so that after receiving a data packet, the forwarding UE finds, based on an L2 ID carried in the data packet, an L2 ID paired with the L2 ID and an L2 ID of final receiving UE to which the data packet is to be sent, fills the paired L2 ID and the L2 ID of the final receiving UE in the data packet, and forwards the data packet to the final receiving UE, so that the data packet is forwarded.

The foregoing description is based on an example in which there is the BAP layer model above an RLC layer. Actually, the BAP layer is a logical layer, and may exist in any existing protocol layer (for example, an SL physical (physical, PHY) layer/a media access control (media access control, MAC) layer/a radio link control (radio link control, RLC) layer/a packet data convergence protocol (packet data convergence protocol, PDCP) layer/a service data adaptation protocol (service data adaptation protocol, SDAP) layer/a radio resource control (radio resource control, RRC) layer/a non-access stratum (non-access stratum, NAS) layer/a V2X layer/a PC5-S layer/an APP layer) or a newly defined layer.

### Embodiment 5

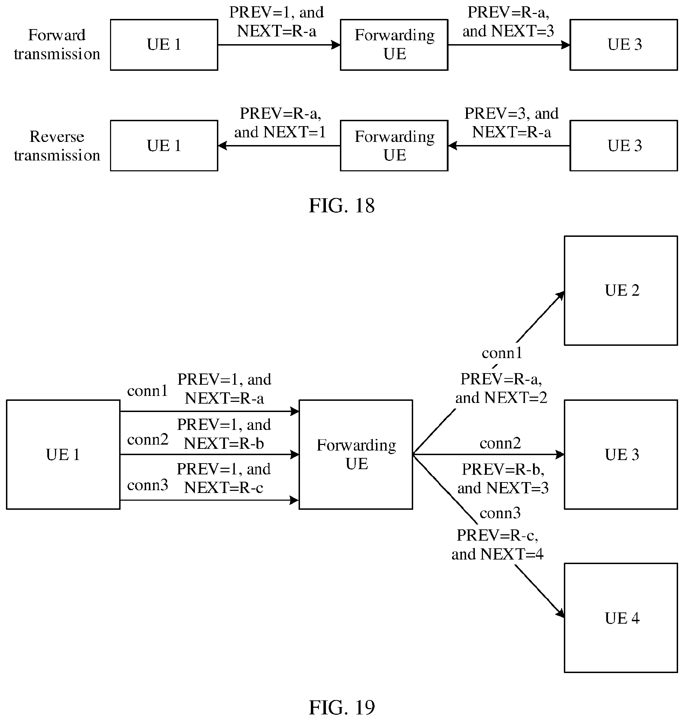

Forwarding UE maintains only one L2 ID for each SL communication connection. It may be understood that a NEXT identifier in a data packet received by the forwarding UE for an SL communication connection is same as a PREV identifier in a data packet forwarded by the forwarding UE. A communication connection established between UE 1 and UE 3 through the forwarding UE may be used as an SL communication connection. As shown in FIG. 18, the following is included:

In a forward data transmission process, the forwarding UE receives a data packet (where a PREV identifier is an identifier <PREV=1> of the UE 1 and a NEXT identifier is the identifier <NEXT=R-a> of the forwarding UE) sent by the UE 1 (sending UE), and then forwards the data packet to the UE 3 (receiving UE) (where a PREV identifier is the identifier <PREV=R-a> of the forwarding UE, and a NEXT identifier is an identifier <NEXT=3> of the UE 3).

In a reverse data transmission process, the forwarding UE receives a data packet (where a PREV identifier is an identifier <PREV=3> of the UE 3, and a NEXT identifier is the identifier <NEXT=R-a> of the forwarding UE) sent by the UE 3, and then forwards the data packet to the UE 1 (where a PREV identifier is the identifier <PREV=R-a> of the forwarding UE, and a NEXT identifier is an identifier <NEXT=1> of the UE 1).

For example, the UE 1 sends data to the UE 3. After receiving a data packet sent by the UE 1, through layer-by-layer parsing, the forwarding UE determines, at a MAC layer, PREV+NEXT identifiers in a MAC layer header of the received data packet. If obtained PREV+NEXT identifiers are (UE 1 L2 ID, R_a), it indicates that the data packet is sent to the forwarding UE. The forwarding UE may search for, based on R_a at a BAP layer, an RLC layer, or another protocol layer, a routing table that is related to R_a, to find a relationship between R_a and an identifier of final receiving UE. For example, R_a or UE 1 L2 ID+R_a corresponds to a UE 3 L2 ID. The forwarding UE fills the PREV+NEXT identifiers as (R_a, UE 3 L2 ID) in the data packet, and finally forwards the data packet to the UE 3. Conversely, in reverse transmission, if the UE 3 sends data to the UE 1, when the forwarding UE determines that PREV+NEXT identifiers in a MAC layer header of a received data packet are (UE 3 L2 ID, R_a), it indicates that the data packet is sent to the forwarding UE. The forwarding UE may search for, based on R_a at a BAP layer, an RLC layer, or another protocol layer, a routing table that is related to R_a, to find a relationship between R_a and an identifier of final receiving UE. For example, R_a or UE 3 L2 ID+R_a corresponds to a UE 1 L2 ID. Before forwarding the data packet, the forwarding UE fills the PREV+NEXT identifiers as (R_a, UE 1 L2 ID) in the data packet, and then sends the data packet to the UE 1. According to this solution, the forwarding UE may determine, based on {PREV ID+NEXT ID} carried in a data packet received from a previous-hop node (for example, the UE 1), an identifier of next-hop UE (for example, the UE 3).

For example, FIG. 19 shows a case in which one sending UE sends data packets to a plurality of receiving UEs through forwarding UE. It is assumed that the UE 1 needs to perform SL communication with all of UE 2, the UE 3, and UE 4 through same forwarding UE. In this case, an L2 ID allocated by the forwarding UE to a forwarding connection between the UE 1 and the UE 2 may be R_a. An L2 ID allocated by the forwarding UE to a forwarding connection between the UE 1 and the UE 3 may be R_b. An L2 ID allocated by the forwarding UE to a forwarding connection between the UE 1 and the UE 4 may be R_c. The forwarding UE allocates different L2 IDs to different forwarding connections. Therefore, the forwarding UE distinguishes, based on the different L2 IDs allocated by the forwarding UE to the different forwarding connections, UE (the UE 2/the UE 3/the UE 4) to which data received from the UE 1 is forwarded or that data forwarded to the UE 1 is received from the UE 2/the UE 3/the UE 4. As a result, disorder does not occur when the forwarding UE performs data transmission in a plurality of SL communication connections.

In addition, for how to forward a data packet in the forwarding UE in Embodiment 5, refer to the descriptions of the four models in FIG. 17 in Embodiment 4. Details are not described again in this embodiment of this application.

Compared with Embodiment 4 in which the forwarding UE needs to maintain two L2 IDs for each SL communication connection, in this embodiment of this application, the forwarding UE needs to maintain only one L2 ID for each SL communication connection. The forwarding UE may obtain, with reference to the NEXT identifier or the PREV+NEXT identifiers in the received data packet, the NEXT identifier for further forwarding the data packet, to implement data routing and forwarding between the sending UE and the receiving UE. This not only reduces a quantity of L2 IDs maintained by the forwarding UE, but also avoids conversion between R_a and R_b for the forwarding UE in a process of forwarding the data packet.

There are two manners for determining the identifier of the next-hop UE. In one manner, the forwarding UE searches for a corresponding routing table based on the NEXT identifier in the received data packet, and then determines the identifier of the next-hop UE based on the routing table. In the other manner, the forwarding UE searches for a corresponding routing table based on the PREV identifier and the NEXT identifier in the received data packet, to determine the identifier of the next-hop UE (where the PREV identifier is used to prevent the forwarding UE from forwarding again the data packet to the UE that sends the data packet).

### Embodiment 6

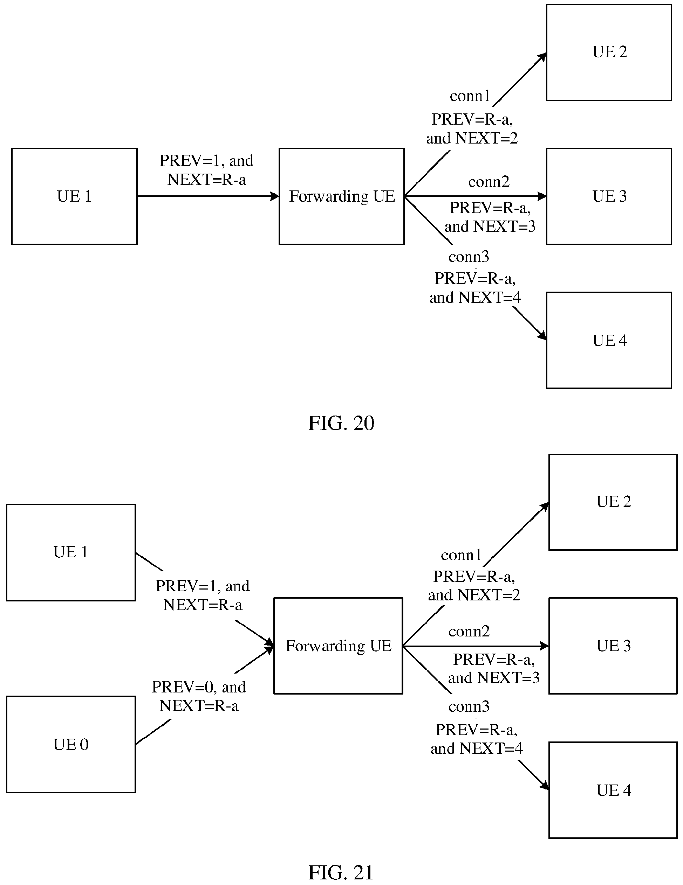

Forwarding UE maintains only one L2 ID for all SL communication connections. It may be understood that a NEXT identifier in a data packet received by the forwarding UE for all SL communication connections is same as a PREV identifier in a data packet forwarded by the forwarding UE. A specific process in which the forwarding UE implements data routing and forwarding between sending UE and a plurality of receiving UEs is shown in FIG. 20.
1. For data transmission between the forwarding UE and UE 2/UE 3/UE 4:
   (1) In a process in which the forwarding UE receives a data packet, when the UE 2/the UE 3/the UE 4 sends a data packet to the forwarding UE, the forwarding UE easily determines, based on a PREV identifier carried in the data packet, UE from which the data packet comes.
   (2) In a process in which the forwarding UE sends a data packet, after receiving a data packet from UE 1, the forwarding UE cannot determine, based on R_a carried in the data packet, UE to which the data packet is forwarded. Therefore, a BAP layer needs to be added. The forwarding UE may determine a destination TGT of the data packet based on TGT identification information in a BAP layer header of the data packet, and then determine, based on a routing table, a NEXT identifier corresponding to the TGT, to determine next-hop UE to which data is to be sent. The forwarding UE forwards the data packet to corresponding receiving UE through the next-hop UE.
2. For data transmission between the forwarding UE and the UE 1 (because a data packet sent by the forwarding UE to the UE 1 is sent from the UE 2/the UE 3/the UE 4, a source of the data packet needs to be identified, or when a data packet is sent to the UE 2/the UE 3/the UE 4, a source of the data packet needs to be identified; therefore, the BAP layer needs to be added to the forwarding UE):
   (1) In a process in which the forwarding UE sends a data packet, after receiving a data packet from the UE 2/the UE 3/the UE 4, the forwarding UE identifies, based on R_a carried in the data packet, that the data packet is finally routed to the UE 1, and then forwards the data packet to the UE 1.
   (2) In a process in which the forwarding UE receives a data packet, after receiving a data packet sent by the UE 1, the forwarding UE cannot determine, based on R_a carried in the data packet, UE to which the data packet is forwarded. Therefore, the BAP layer needs to be added. The forwarding UE may determine a destination TGT of the data packet based on TGT identification information in a BAP layer header of the data packet.

In conclusion, whether the BAP layer needs to be added to the forwarding UE may be determined based on a situation. A manner of dynamically determining, by the forwarding UE, whether the BAP layer needs to be added is as follows: If one sending UE sends a data packet to a plurality of receiving UEs through the same forwarding UE, the BAP layer needs to be added, to identify a TGT identifier in the data packet. Then, a corresponding routing table is determined based on the TGT identifier, and next-hop UE is finally determined based on a NEXT identifier in the routing table.

Whether the BAP layer needs to be added to the forwarding UE may be determined by the forwarding UE or the sending UE. Optionally, an identifier of the BAP layer may be allocated by the forwarding UE or the sending UE. Details are as follows.

If the identifier of the BAP layer is determined by the sending UE, when constructing a data packet, the sending UE adds a BAP layer header to the data packet and includes a BAP identifier (namely, a TGT identifier).

In another embodiment, the data packet may further carry indication information, and the indication information indicates whether the data packet carries the BAP layer header. For example, the indication information is further carried at an RLC layer of the data packet, to indicate that the data packet includes the BAP layer. Because the forwarding UE may receive a data packet with the BAP layer header, or may receive a data packet without the BAP layer header, whether the data packet includes the BAP layer header needs to be indicated at a layer (for example, the RLC layer) below the BAP layer.

For example, if the indication information is carried at the RLC layer of the data packet, after receiving the data packet, the forwarding UE performs layer-by-layer parsing, and obtains the indication information when parsing the RLC layer. Then, after determining, based on the indication information, that the data packet includes the BAP layer header, the forwarding UE performs BAP layer parsing to obtain the TGT identifier, queries the corresponding routing table based on the TGT identifier, and then determines, based on the corresponding NEXT identifier in the routing table obtained through querying, the next-hop UE that receives the data packet.

If the identifier of the BAP layer is determined by the forwarding UE, after receiving a packet sent by the sending UE and determining that the forwarding UE can perform data routing with final receiving UE, the forwarding UE sends a feedback packet to the sending UE. A BAP layer header is added to the feedback packet, and the feedback packet carries a BAP identifier allocated by the forwarding UE to the final receiving UE, so that when the sending UE subsequently needs to send data to the UE 2/the UE 3/the UE 4, different BAP identifiers allocated by the forwarding UE are separately carried. After receiving the data packet from the UE 1, the forwarding UE learns, based on the carried BAP identifier, that the data packet is to be subsequently sent to the UE 2, the UE 3, or the UE 4, to separately send the data packet to different UEs (for example, a PREV identifier carried in a MAC header of the forwarded data packet is an identifier of the forwarding UE, and a NEXT identifier is an identifier of the final receiving UE, for example, an identifier of the UE 2/the UE 3/the UE 4). Optionally, when receiving the BAP identifier allocated by the forwarding UE, the sending UE further needs to obtain the identifier of the UE 2/the UE 3/the UE 4. The identifier may be an APP ID or an L2 ID of the UE 2/the UE 3/the UE 4. The identifier may be carried in the feedback packet. Optionally, when the UE 1 needs to send a data packet to the UE 2/the UE 3/the UE 4, each data packet delivered by an upper layer to an access stratum (access stratum, AS) needs to carry the identifier of the final receiving UE (TGT UE), and the identifier of the final receiving UE may be an APP ID or an L2 ID of the final receiving UE.

If the data packet sent by the UE 1 to the forwarding UE does not have the BAP layer header, the BAP layer may be initially configured for the UE 1 and the forwarding UE on a control plane. However, in this case, the BAP layer header of the data packet does not need to carry the BAP identifier, or the BAP identifier is subsequently allocated on a user plane or the control plane.

A specifically constructed data packet may meet at least one of the following:
(1) The BAP layer header is added to the data packet, and the data packet carries a BAP UE ID (for the TGT UE).
(2) The RLC layer of the data packet includes the indication information indicating that there is the BAP layer. Because the forwarding UE may receive a data packet with the BAP layer header, or may receive a data packet without the BAP layer header, whether the data packet includes the BAP layer header needs to be explicitly/implicitly indicated by using the layer (for example, the RLC layer) below the BAP layer.
(3) The forwarding UE knows, based on the BAP UE ID (for the TGT UE) included by the sending UE, that the data packet is finally routed to the UE 3 instead of the UE 2 or the UE 4.
(4) Conversely, the forwarding UE may alternatively multiplex data sent by the UE 2/the UE 3/the UE 4 to the UE 1, and send the data to the UE 1.

The following describes the first constructed packet (how the forwarding UE allocates BAP UE IDs):
(1) The forwarding UE adds the BAP layer header to the first packet returned to the UE 1, and includes a BAP UE ID allocated by the forwarding UE, so that when subsequently sending data to the UE 2/the UE 3/the UE 4, the UE 1 respectively fills different BAP UE IDs allocated by the forwarding UE. After receiving a data packet, the forwarding UE learns, based on a carried BAP UE ID, whether the data packet is subsequently forwarded to the UE 2, the UE 3, or the UE 4. In this way, data packets are respectively sent to different UEs (where in MAC headers of the forwarded data packets, PREV L2 IDs are filled as an L2 ID of the forwarding UE, and NEXT L2 IDs are respectively filled as L2 IDs of final receiving UEs, for example, the L2 ID of the UE 2/the UE 3/the UE 4). Therefore, when receiving the BAP UE ID allocated by the forwarding UE, the UE 1 also needs to obtain the identifier of the UE 2/the UE 3/the UE 4, where the identifier may be the APP ID or the L2 ID of the UE 2/the UE 3/the UE 4. When the corresponding UE 1 needs to send the data packet to the UE 2/the UE 3/the UE 4, each data packet delivered by the upper layer to the AS layer needs to carry an identifier of target UE, and the identifier of the target UE may be an APP ID or an L2 ID of the UE.
(2) If the data packet between the UE 1 and the forwarding UE does not have the BAP layer header at the beginning, the BAP layer may be initially configured for the UE 1 and the forwarding UE on the control plane. However, in this case, the BAP layer header does not carry the BAP UE ID, or the BAP UE ID is subsequently allocated on the user plane or the control plane.
(3) If the forwarding UE receives response messages of the UE 2, the UE 3, and the UE 4, the response messages may be encapsulated and sent together (because for all the messages: PREV L2 ID=R_a and NEXT L2 ID=1). Alternatively, the response messages may not be encapsulated together. Specifically, there may be two sending manners.
   opt1: Multiplexing is not allowed. To be specific, the first received response packet carrying a UE APP ID of the UE 2, the first received response packet carrying a UE APP ID of the UE 3, and the first received response packet carrying a UE APP ID of the UE 4 cannot be encapsulated into one data packet for transmission to the UE 1.
   opt2: Multiplexing is allowed. However, packets transparently transmitted by the forwarding UE need to be encapsulated as independent IEs, and carry a plurality of allocated BAP IDs in sequence. The packets and the BAP IDs are in one-to-one correspondence. For example, sorting and encapsulation may be performed based on an order of the IDs. Alternatively, the plurality of BAP IDs are respectively mapped to corresponding locations in the packets, and then encapsulated. For example, the following plurality of independent packets are uniformly encapsulated into one packet or transport block (transport block, TB) for sending: A response packet of the UE 2 carries {UE 2 APP ID, BAP UE ID=2}; a response packet of the UE 3 carries {UE 3 APP ID, BAP UE ID=3}; and a response packet of the UE 4 carries {UE 4 APP ID, BAP UE ID=4}.

The receiving UE (the UE 1) performs mapping depending on whether the received packet carries the BAP layer. If the packet does not carry the BAP layer, the receiving UE (the UE 1) maps/distinguishes between UEs based on other L2 IDs or L1 IDs. If the packet carries the BAP layer, the receiving UE (the UE 1) maps/distinguishes between UEs based on BAP UE IDs.

For example, FIG. 21 shows a case in which a plurality of sending UEs send data packets to a plurality of receiving UEs through forwarding UE. Based on the solution in FIG. 20, UE 0 also performs SL communication with the UE 3 through the forwarding UE. Therefore, in a communication process between the forwarding UE and the receiving UE, when receiving a data packet to be forwarded to the UE 3, the forwarding UE also needs to include a BAP layer header. In addition, a BAP identifier needs to be carried in the BAP header to indicate UE that sends data to the UE 3. For example, if the forwarding UE determines, based on PREV L2 ID+NEXT L2 ID in the received data packet, that the data is sent by the UE 1 to the UE 3, an identifier of the UE 1 may be carried in the data packet forwarded to the UE 3. The identifier of the UE 1 may be a PREV L2 ID in the data packet received by the forwarding UE.

In this embodiment of this application, in a scenario in which the forwarding UE maintains a common L2 ID for all SL connections, the added BAP layer and information carried in the BAP layer header ensure that data routing and forwarding between the sending UE and the receiving UE can be performed normally. Compared with Embodiment 5 in which one L2 ID is maintained for each SL communication, a quantity of L2 IDs maintained by the forwarding UE is further reduced and a probability of an L2 ID conflict is reduced.

### Embodiment 7

In Embodiment 6, the forwarding UE maintains one L2 ID for all SL communication. However, the BAP layer needs to be dynamically added, and BAP identifiers need to be allocated and maintained. Consequently, this solution is excessively complex to use. Therefore, Embodiment 4 is a simpler solution, that is, the BAP layer always carries the BAP identifier (where there is no need to flexibly determine when the BAP identifier is carried or not). Optionally, allocation of the BAP identifiers may not be required, and only an L2 ID of final receiving UE needs to be carried at the BAP layer.

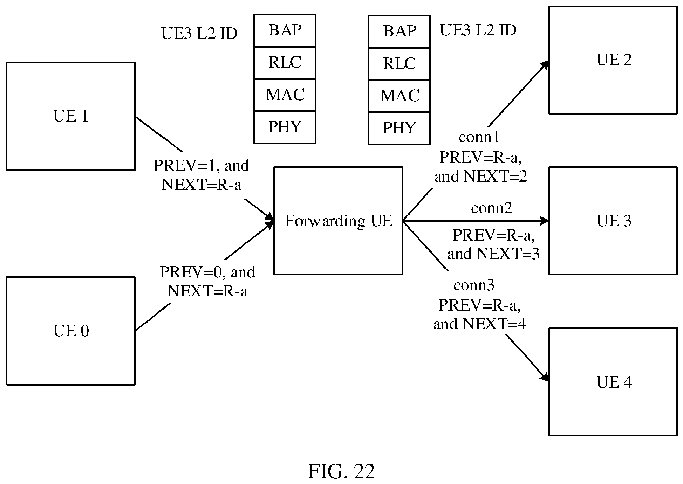

For example, as shown in FIG. 22, it is assumed that a process in which sending UE (UE 1) sends data (where a data packet carries a PREV identifier, a NEXT identifier, a TGT identifier, and/or an SRC identifier) to receiving UE (UE 3) is as follows.
1. For the data packet sent by the UE 1 to forwarding UE, in a MAC layer header of the data packet, the PREV identifier is filled as a UE 1 L2 ID, and the NEXT identifier is filled as a forwarding UE L2 ID; and in a BAP layer header, a TGT identifier is filled as a UE 3 L2 ID and/or the SRC identifier is filled as the UE 1 L2 ID.
2. The forwarding UE processes the data packet.
   (1) The forwarding UE performs layer-by-layer parsing on the data packet. In the received MAC layer header, when the NEXT identifier is equal to an L2 ID of the forwarding UE, the forwarding UE considers that the data packet is data sent to the forwarding UE, needs to further parse and unpack the data packet level by level, and finally delivers the data packet to a BAP layer of the forwarding UE.
   (2) The BAP layer determines whether the TGT identifier filled in the BAP layer header is an identifier of the forwarding UE, and if the TGT identifier filled in the BAP layer header is not the identifier of the forwarding UE, the forwarding UE determines that the data needs to be forwarded. The BAP layer forwards the data packet to a transmitting end of the forwarding UE. Optionally, the BAP layer may send the TGT identifier to a lower layer (for example, an RLC layer or a MAC layer) of the BAP layer.
   (3) At the transmitting end of the forwarding UE, the TGT identifier filled in the BAP layer header remains unchanged, that is, the TGT identifier is still the UE 3 L2 ID.
   (4) The MAC layer searches for a routing table based on the UE 3 L2 ID sent by the BAP layer to obtain a next-hop node and a corresponding L2 ID. Alternatively, the BAP layer searches for a routing table and notifies the MAC layer of an L2 ID of next-hop UE. For example, the next hop in this embodiment is the UE 3. In the MAC layer header, the PREV identifier is filled as the L2 ID of the forwarding UE, and the NEXT identifier is filled as the L2 ID of the next hop (which is the UE 3 L2 ID herein, but is the L2 ID of the next-hop node instead of the UE 3 L2 ID if a plurality of hops are supported).
3. After receiving the data packet, the UE 3 performs processing. The UE 3 reads the NEXT identifier in the MAC layer header of the data packet. When the identifier is the L2 ID of the UE 3, the UE 3 preliminarily considers that the data packet is sent to the UE 3. Therefore, the UE 3 decapsulates the data packet level by level and finally sends the data packet to a BAP layer. The BAP layer of the UE 3 finds that a BAP layer identifier carried at the BAP layer is an identifier of the UE 3 (for example, the UE 3 L2 ID), the UE 3 finally considers that the data packet is sent to the UE 3, and finally delivers the data packet to an upper layer (for example, a PDCP layer/an RRC layer/an SDAP layer/a V2X layer/a NAS layer/an APP layer) for processing.

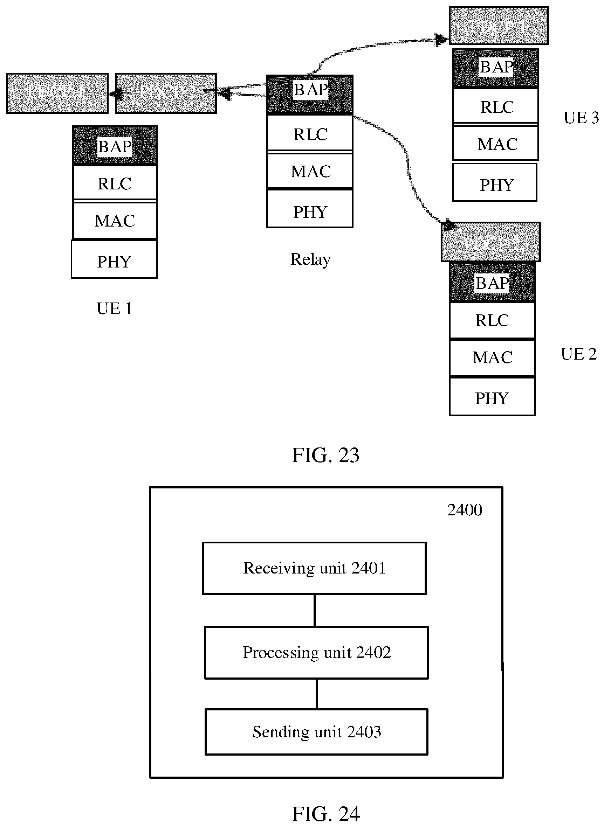

The forwarding UE always maintains one L2 ID for all SL communication connections, always has the BAP layer, and includes an identifier of initial sending UE (for example, a sending UE L2 ID). After receiving a data packet, UE at a final receiving end can deliver the data packet to a corresponding PDCP entity. One RLC bearer may correspond to a plurality of PDCP entities, and each PDCP entity corresponds to a PDCP entity jointly maintained by sending UE and receiving UE (because an RLC entity is maintained hop by hop, the PDCP entity is maintained in an end-to-end manner, and a PDCP serial number (serial number, SN) is also maintained per PDCP entity). For example, as shown in FIG. 23, when UE 1 communicates with both of UE 2 and UE 3 through forwarding UE (a relay), the UE 3 and the UE 2 need to send data to the UE 1. After receiving a data packet and delivering the data packet to an RLC entity, the UE 1 needs to determine whether the data packet is sent to a PDCP entity 1 or a PDCP entity 2 in an upper level. In addition, optionally, the forwarding UE may further include at least one of an identifier (for example, a sending UE L2 ID) of the initial sending UE 1, an SL link identifier (for example, a link ID), SL bearer information or an SL bearer identifier, logical channel information or a logical channel identifier, and quality of service QoS information or a QoS identifier. Therefore, after receiving a data packet, final receiving UE can deliver, based on the foregoing information, the data packet to a correct PDCP entity/SDAP entity/RRC entity or the like, for example, by using one connection identifier that is of each PDCP entity and that is maintained by the final receiving UE. A connection may be uniquely bound/associated/identified by using an SRC ID and a TGT ID carried in a packet.

In this embodiment of this application, the forwarding UE always maintains one L2 ID for all SL communication connections, always has the BAP layer, and includes an identifier (for example, an L2 ID, an L1 ID, a MAC address, or an IP address) of the final receiving UE, to implement data routing and forwarding between the sending UE and the receiving UE.

Similarly, the foregoing description is based on an example in which there is a BAP layer model above an RLC layer. Actually, the BAP layer is a logical layer, and may exist in any existing protocol layer (for example, an SL PHY layer/a MAC layer/an RLC layer/a PDCP layer/an SDAP layer/an RRC layer/a NAS layer/a V2X layer/a PC5-S layer/an APP layer) or a newly defined layer.

### Embodiment 8

The foregoing embodiments of this application may be used in not only a UE-UE forwarding scenario but also a UE-network forwarding scenario. In this case, a Uu interface between forwarding UE and a base station is replaced with an SL segment in the SL communication connection in the foregoing embodiments. Therefore, the UE-network forwarding scenario may be considered as a special case of a UE-UE forwarding system.

Alternatively, the UE may be a network device node, for example, a network element node such as an eNB/a gNB/a control unit (central unit, CU)/a distributed unit (distributed unit, DU)/an access and mobility management function network element (access and mobility management function, AMF)/a user plane function (user plane function, UPF)/an element management system (element management system, EMS)/a network management system (network management system, NMS)/an operations, administration, and maintenance (operations, administration and maintenance, OAM) network element node. A communication interface may also be applicable to an interface (for example, an SL interface) between UEs, an interface (for example, a Uu interface) between UE and a RAN network device, and an interface between devices (for example, an Xn interface between stations /an Ng interface between network elements/an F1 interface between the CU and the DU).

For example, in the UE-to-network forwarding scenario, a RAN device node (such as the gNB, the CU, or the DU) may also be considered as a UE node. A UE 1->UE 2->UE 3->gNB scenario is used as an example. The UE 1 expects to find a node for accessing the Internet, and sets a TGT node in a packet sent to another node as a node identifier of the gNB. The identifier may be predefined in a protocol (for example, predefined as "0000"), preset in sending UE (the UE 1), or notified to forwarding UE by using a message such as a system information block (system information block, SIB)/an RRC/a NAS message and forwarded by the forwarding UE to the sending UE (the UE 1). The broadcast/multicast packet used for establishing a routing table described above is not transmitted through an SL interface when the packet is transmitted between the UE 3 and the gNB, but is transmitted through a Uu interface. A carried identifier is also similar to the identifier carried in the foregoing packet, for example, may include one or more of a PREV identifier, a NEXT identifier, an SRC identifier, and a TGT identifier.

After a routing table is established, data communication is used as an example for description.
1. Uplink:
   (1) The UE 1 sends a data packet to the gNB. Similar to the foregoing solution, data is transmitted through the SL interface, and one or more of the PREV identifier, the NEXT identifier, the SRC identifier, and the TGT identifier are included.
   (2) After receiving the data packet sent by the UE 1, the UE 2 determines that the TGT identifier is finally to be sent to the gNB, and therefore determines, by searching for the routing table, that a next hop is the UE 3. Therefore, the UE 2 also sends/forwards the data packet through the SL interface, where the data packet carries {PREV=2, NEXT=3, TGT=0000, SRC=1}.
   (3) After receiving the data packet sent/forwarded by the UE 2, the UE 3 determines that the TGT identifier is finally to be sent to the gNB, and therefore determines, by searching for the routing table, that a next hop is the gNB. Therefore, the UE 3 sends/forwards the data packet through the Uu interface, where the data packet carries {PREV=3, NEXT=0000, TGT=0000, SRC=1}.
   (4) After receiving the data packet sent/forwarded by the UE 3, the gNB learns, based on SRC=1, that the data packet is sent by the UE 1, and further processes the data packet, for example, forwards the data packet to a CN, optionally identifies that data comes from the UE 1, and transmits the data packet based on a tunneling protocol (GPRS tunneling protocol, GTP) corresponding to the UE 1.
2. Downlink:
   (1) After receiving a data packet from the CN (for example, the UPF), the gNB learns that the data packet is finally to be sent to the UE 1, and may learn, by searching for the routing table of the gNB, that a next hop is the UE 3. Therefore, the gNB sends/forwards the data packet through the Uu interface, where the data packet carries {PREV=0000, NEXT=3, TGT=1, SRC=0000} in an explicit/implicit manner. For example, the PREV identifier and/or the SRC identifier may be omitted. The UE 3 learns, from the data packet received from the Uu interface, that the PREV identifier and the SRC identifier are sent by a gNB corresponding to 0000, and may add corresponding identification information to the SL interface during subsequent further sending/forwarding. The NEXT identifier may also be implicitly carried, for example, may be identified by using a C-RNTI corresponding to the UE 3, and the UE 3 learns, by parsing the C-RNTI, that the data packet is sent to the UE 3 or the data packet is a data packet of interest (where the data packet needs to be received and further forwarded to the UE 1).
   (2) After receiving a downlink data packet from the gNB, the UE 3 searches for the routing table based on TGT=1 and learns that a next hop is the UE 2, and further forwards the downlink data packet through the SL interface, where the data packet carries {PREV=3, NEXT=2, TGT=1, SRC=0000}.
   (3) Similarly, after receiving the data packet sent/forwarded by the UE 3 through the SL, the UE 2 sends/forwards the data packet through the SL. The UE 2 learns, after searching for the routing table, that a next hop of TGT=1 is the UE 1, and further forwards the data packet through the SL interface, where the data packet carries {PREV=2, NEXT=1, TGT=1, SRC=0000}.
   (4) After receiving the SL data packet sent/forwarded by the UE 2 and parsing the NEXT identifier and the TGT identifier, the UE 1 learns that the SL data packet is sent to the UE 1, and therefore sends the SL data packet to an upper layer for further processing.

It should be specially noted that in this embodiment of this application, the packet and the data packet may carry information such as the PREV identifier, the NEXT identifier, the TGT identifier, and the SRC identifier in the implicit or explicit manner.

FIG. 24 is a schematic diagram of a structure of a communication apparatus according to an embodiment of this application. As shown in FIG. 24, an apparatus 2400 includes a receiving unit 2401, a processing unit 2402, and a sending unit 2403. A specific implementation process is as follows.

The receiving unit 2401 is configured to receive a first packet from a second node, where the first packet includes an identifier of the second node, a first identifier, and an identifier of a receiving node.

The processing unit 2402 is configured to: determine, based on the first packet, whether a first node is the receiving node, and determine a first routing table based on the first packet when it is determined that the first node is not the receiving node, where the first routing table is used for data routing to the receiving node.

The apparatus 2400 in this application solves the following problem: When SL communication cannot be implemented between UEs due to a hardware capability, a distance, external interference, or the like, a UE-to-UE forwarding system is introduced, that is, at least one forwarding UE is added between sending UE and receiving UE, to implement communication between the sending UE and the receiving UE. Further, a routing table for data transmission between the sending UE and forwarding UE, between forwarding UEs, and between the forwarding UE and the receiving UE is constructed to ensure working of the UE-to-UE forwarding system.

In an implementation, the processing unit 2402 is specifically configured to determine the first routing table based on a routing table that is on the first node and that is for data routing with the receiving node.

The apparatus 2400 in this application further solves the following problem: When determining that a forwarding node is not the final receiving node, the forwarding node queries, based on the identifier of the receiving node in the received packet, whether the forwarding node stores a routing table that can be used for data routing with the receiving node. If the forwarding node stores the routing table that can be used for data routing with the receiving node, the forwarding node does not need to further send a packet to construct the routing table that can be used for data routing with the receiving node.

In an implementation, the sending unit 2403 is configured to send a third packet to another node in a multicast and/or broadcast manner, where the third packet includes the identifier of the receiving node.

The receiving unit 2401 is further configured to receive a fourth packet from a fourth node, where the fourth packet includes an identifier of the fourth node and an identifier of the first node, and a routing table for data routing with the receiving node exists on the fourth node, or the fourth node is the receiving node.

The processing unit 2402 is further configured to establish the first routing table based on the identifier of the fourth node.

The apparatus 2400 in this application further solves the following problem: When the forwarding node finds that a routing table for data routing with the receiving node does not exist in the forwarding node, the forwarding node needs to further send a packet to find a node that can route data with the receiving node, and then construct a routing table by using a packet sent by the node that can route data with the receiving node, so that the forwarding node can have the routing table for data routing with the receiving node.

In an implementation, when the routing table for data routing with the receiving node exists on the fourth node, the fourth packet further includes the identifier of the receiving node.

In an implementation, the sending unit 2403 is further configured to: when the first identifier is a destination broadcast identifier, send a second packet to the second node.

The apparatus 2400 in this application further resolves the following problem: If a destination identifier in the packet received by the forwarding node is a broadcast identifier, it indicates that a previous-hop node does not have a routing table that can be used for data routing with the final receiving node. Therefore, the forwarding node needs to feed back information to the previous-hop node, so that the previous-hop node knows that the forwarding node has the routing table that can be used for data routing with the final receiving node and a routing table may be subsequently constructed between the previous hop and the node.

In an implementation, the second node is a forwarding node.

In an implementation, the first packet or the second packet further includes an identifier of a sending node.

The processing unit 2402 is further configured to determine a second routing table based on the first packet, where the second routing table is used for data routing to the sending node.

The apparatus 2400 in this application further resolves the following problem: The identifier of the sending node is included in the first packet or the second packet, therefore, the first node that receives the packet can construct, based on the identifier of the second node and the identifier of the sending node in the packet, a routing table for data routing to the second node.

In an implementation, the second routing table includes an initial identifier, a next-hop identifier, and the identifier of the sending node, where the initial identifier is an identifier of a node that is to send data, the next-hop identifier is an identifier of a node that receives the data, and the identifier of the sending node indicates that the data is finally sent to the sending node.

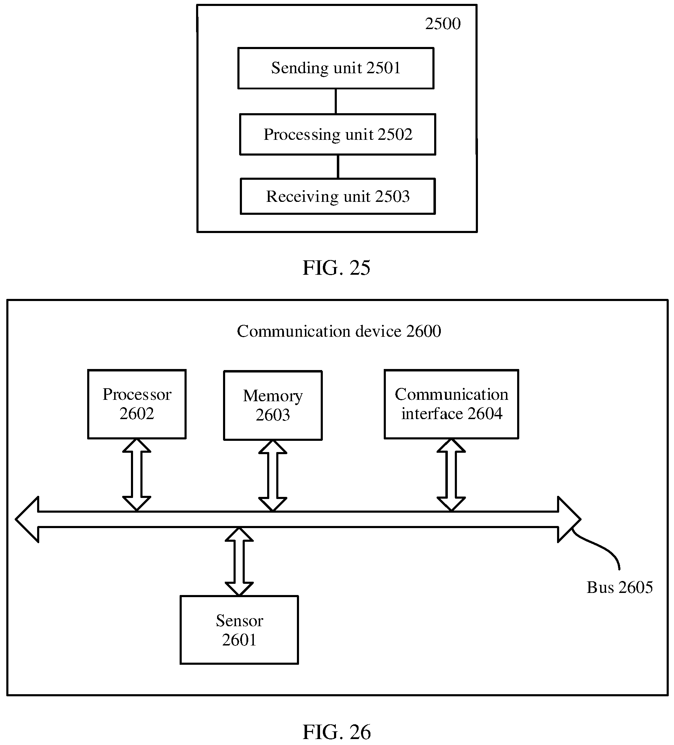

FIG. 25 is a schematic diagram of a structure of a communication apparatus according to an embodiment of this application. As shown in FIG. 25, an apparatus 2500 includes a processing unit 2501, a sending unit 2502, and a receiving unit 2503. A specific implementation process is as follows.

The processing unit 2501 is configured to: determine that a first routing table does not exist, where the first routing table is used for data routing to a receiving node, and determine a first packet, where the first packet includes an identifier of a sending node, a destination broadcast/multicast identifier, and an identifier of the receiving node.

The sending unit 2502 is configured to send the first packet to a first node.

The receiving unit 2503 is configured to receive a second packet from the first node, where the second packet includes an identifier of the first node, the identifier of the sending node, and the identifier of the receiving node.

The processing unit 2501 is further configured to determine the first routing table based on the second packet.

The apparatus 2400 in this application solves the following problem: When performing SL communication, the sending node first queries whether the sending node has the routing table corresponding to the receiving node. If the sending node has the routing table corresponding to the receiving node, data is directly routed. If the sending node does not have the routing table corresponding to the receiving node, a connection link for data routing with the receiving node is constructed by sending a packet, to facilitate subsequent data sending.

In an implementation, the processing unit 2501 is specifically configured to determine, based on the identifier of the receiving node, that a routing table for data routing with the receiving node does not exist.

FIG. 26 is a schematic diagram of a structure of a communication device according to an embodiment of this application. A communication device 2600 is shown in FIG. 26. The communication device 2600 may be any one of the sending UE, the forwarding UE, and the receiving UE, and may include a sensor 2601, a processor 2602, a memory 2603, a communication interface 2604, and a bus 2605. The processor 2602, the memory 2603, and the communication interface 2604 in the terminal device 2600 may establish a communication connection through the bus 2605.

The sensor 2601 is configured to send a packet and a data packet and receive a packet and a data packet.

The processor 2602 may be a central processing unit (central processing unit, CPU). In the foregoing embodiments, operations such as parsing, constructing a routing table, searching for a routing table, and verifying an identifier performed by the sending UE, the forwarding UE, and the receiving UE after receiving a packet and/or a data packet are all performed by the processor 2602.

The memory 2603 may include a volatile memory (volatile memory), such as a random-access memory (random-access memory, RAM); the memory 2603 may include a non-volatile memory (non-volatile memory), such as a read-only memory (read-only memory, ROM), a flash memory, a hard disk drive (hard disk drive, HDD), or a solid-state drive (solid state drive, SSD); or the memory 2603 may further include a combination of the foregoing types of memories. Data such as a packet, a data packet, an identifier, and a routing table is stored in the memory 2603. In addition, the memory 2603 is further configured to store corresponding program instructions and the like that are executed by the processor 2604 to implement a secure startup method described in the foregoing embodiments.

The present invention provides a computer-readable storage medium, where the computer-readable storage medium stores a computer program, and when the computer program is executed on a computer, the computer is enabled to implement any one of the foregoing methods.

The present invention provides a computing device, including a memory and a processor, where the memory stores executable code, and when executing the executable code, the processor implements any one of the foregoing methods.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

In addition, aspects or features in embodiments of this application may be implemented as a method, an apparatus or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

In the foregoing embodiment, the non-contact interaction apparatus 900 shown in FIG. 9 may be implemented in whole or in part by using software, hardware, firmware, or any combination thereof. When software is used to implement the apparatus, all or a part of the apparatus may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device integrating one or more usable media, for example, a server or a data center. The usable medium may be a magnetic medium (for example, a floppy disk, a hard disk, or a magnetic tape), an optical medium (for example, DVD), a semiconductor medium (for example, a solid-state drive Solid State Disk (SSD)), or the like.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division. There may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate components may or may not be physically separate, and components displayed as units may or may not be physical units, may be located in one place, or may be distributed on a plurality of network units. A part or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of embodiments of this application essentially, or the part contributing to the current technology, or a part of the technical solutions may be implemented in a form of a software product. The computer software product is stored in a storage medium, and includes several instructions for instructing a computer device (which may be a personal computer, a server, or an access network device) to perform all or a part of the steps of the methods described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, wherein the method is performed by a forwarding node the forwarding node is configured to forward data between at least one sending node and at least one receiving node, the forwarding node stores a first identifier and a second identifier, the first identifier and the second identifier are used to establish sidelink, SL, communication for a first sending node and a first receiving node there is a mapping relationship between the first identifier and the second identifier, and the method comprises:
receiving a first data packet sent by a previous-hop forwarding node or the first sending node, wherein the first data packet comprises a first initial identifier, the first identifier, and an identifier of the first receiving node, the first initial identifier is an identifier of the previous-hop forwarding node or an identifier of the first sending node and the identifier of the first receiving node is used to detect whether the forwarding node stores the identifier of the first receiving node;
determining, at a backhaul adaptation protocol, BAP, layer, an identifier of a next-hop node, wherein the identifier of the next-hop node is obtained by the forwarding node searching for, based on an identifier to which the first identifier is mapped, a routing table that is associated with the identifier to which the first identifier is mapped;
obtaining the identifier of the next-hop node from the routing table; and
forwarding the first data packet to a node corresponding to the identifier of the next-hop node, wherein at a media access control, MAC, layer in the forwarding node, the first initial identifier in the first data packet is set to the second identifier, and the first identifier in the first data packet is set to the identifier of the next-hop node,
wherein either
when the forwarding node comprises one receiving BAP layer and one sending BAP layer, and the receiving BAP layer or the sending BAP layer is shared by all SL connections, the determining, at a BAP layer, an identifier of a next-hop node comprises:
after receiving the first data packet, determining, by the receiving BAP layer based on the identifier of the first receiving node in the first data packet, whether the identifier of the first receiving node is stored;
when determining that the identifier of the first receiving node does not exist, sending, by the receiving BAP layer, the first data packet to the sending BAP layer; and
determining, by the sending BAP layer, the identifier of the next-hop node based on the first initial identifier in the first data packet, and then forwarding the first data packet to a bearer for the SL communication that is established between the first sending node and the first receiving node
or:
when the forwarding node comprises one BAP layer, and the BAP layer is shared by all SL connections, the determining, at a BAP layer, an identifier of a next-hop node comprises:
after receiving the first data packet, determining, by the BAP layer based on the identifier of the first receiving node in the first data packet, whether the identifier of the first receiving node is stored; and
when determining that the identifier of the first receiving node does not exist, determining, by the BAP layer, the identifier of the next-hop node based on the first initial identifier in the first data packet, and then forwarding the first data packet to a bearer for the SL communication that is established between the first sending node and the first receiving node;
or:
when the forwarding node comprises at least two receiving BAP layers and at least two sending BAP layers, each receiving BAP layer and each sending BAP layer correspond to one SL connection, and each SL connection corresponds to one SL bearer, the determining, at a BAP layer, an identifier of a next-hop node comprises:
after receiving the first data packet by using an SL bearer corresponding to a first receiving BAP layer, determining, by the first receiving BAP layer based on the identifier of the first receiving node in the first data packet, whether the identifier of the first receiving node is stored;
when determining that the identifier of the first receiving node does not exist, sending, by the first receiving BAP layer, the first data packet to a first sending BAP layer; and
determining, by the first sending BAP layer, the identifier of the next-hop node based on the first initial identifier in the first data packet, and then forwarding the first data packet to an SL bearer corresponding to the first sending BAP layer, wherein the first receiving BAP layer and the first sending BAP layer perform data routing for an SL established by the first sending node and the first receiving node;
or:
when the forwarding node comprises at least two BAP layers, each BAP layer corresponds to one SL connection, and each SL connection corresponds to at least two SL bearers, the determining, at a BAP layer, an identifier of a next-hop node comprises:
after receiving the first data packet by using a first SL bearer corresponding to a first BAP layer, determining, by the first BAP layer based on the identifier of the first receiving node in the first data packet, whether the identifier of the first receiving node is stored; and
when determining that the identifier of the first receiving node does not exist, determining, by the first BAP layer, the identifier of the next-hop node based on the first initial identifier in the first data packet, and then forwarding the first data packet to a second SL bearer corresponding to the first BAP layer, wherein the first BAP layer performs data routing for an SL established by the first sending node and the first receiving node, the first SL bearer is used to receive the first data packet, and the second SL bearer is used to send a second data packet.

2. The method according to claim 1, wherein before the determining, at a BAP layer, an identifier of a next-hop node, the method further comprises: determining that the identifier of the first receiving node does not exist at the BAP layer.

3. A communication method, wherein the method is performed by a forwarding node the forwarding node is configured to forward data between at least one sending node and at least one receiving node, the forwarding node stores a first identifier, the first identifier is used to establish sidelink, SL, communication between the at least one sending node and the at least one receiving node, and the method comprises:
receiving a first data packet sent by a previous-hop forwarding node or a first sending node, wherein the first data packet comprises a first initial identifier, a first next-hop identifier, a backhaul adaptation protocol, BAP, identifier, and an identifier of a receiving node the first initial identifier is an identifier of the previous-hop forwarding node or an identifier of the first sending node, the first next-hop identifier is the first identifier, and the identifier of the receiving node is used to detect whether the forwarding node stores the identifier of the receiving node;
determining, based on the first initial identifier and the first next-hop identifier, a quantity of receiving nodes that can receive a data packet sent by the previous-hop forwarding node or the first sending node; and
when there are at least two receiving nodes, searching for, by a BAP layer in the forwarding node based on the first next-hop identifier and the identifier of the receiving node, a routing table that is associated with the first next-hop identifier and with the identifier of the receiving node and then obtaining an identifier of a next-hop node from the found routing table.

4. The method according to claim 3, wherein the method further comprises:
forwarding the first data packet to a node corresponding to the identifier of the next-hop node, wherein at a media access control, MAC, layer, the first initial identifier in the first data packet is indicated to be set to the first identifier, and the first next-hop identifier in the first data packet is indicated to be set to the identifier of the next-hop node.

5. The method according to claim 3 or 4, wherein the method further comprises:
when it is determined that there is one receiving node, forwarding the first data packet to a next-hop forwarding node or the receiving node wherein at a MAC layer in the forwarding, the first initial identifier in the first data packet is set to the first identifier, and the first next-hop identifier in the first data packet is set to the identifier of the next-hop node or the identifier of the receiving node.

6. A communication device, wherein the communication device is a forwarding node configured to perform the method according to any one of claims 1 to 5.

7. A computer-readable storage medium, wherein the computer-readable storage medium stores instructions; and when the instructions are run on a computer, the computer is enabled to perform the method according to any one of claims 1 to 5.

8. A computer program product, comprising instructions, wherein when the instructions are run on a computer, the computer is enabled to perform the method according to any one of claims 1 to 5.

9. A communication system, comprising a sending node at least one communication device according to claim 6, and a receiving node.

## Patentansprüche

1. Kommunikationsverfahren, wobei das Verfahren durch einen Weiterleitungsknoten durchgeführt wird, der Weiterleitungsknoten dazu konfiguriert ist, Daten zwischen mindestens einem Sendeknoten und mindestens einem Empfangsknoten weiterzuleiten, der Weiterleitungsknoten eine erste Kennung und eine zweite Kennung speichert, die erste Kennung und die zweite Kennung dazu verwendet werden, eine Sidelink-Kommunikation, SL-Kommunikation, für einen ersten Sendeknoten und einen ersten Empfangsknoten herzustellen, eine Zuordnungsbeziehung zwischen der ersten Kennung und der zweiten Kennung besteht und das Verfahren Folgendes umfasst:
Empfangen eines ersten Datenpakets, das durch einen Previous-Hop-Weiterleitungsknoten oder den ersten Sendeknoten gesendet wird, wobei das erste Datenpaket eine erste Anfangskennung, die erste Kennung und eine Kennung des ersten Empfangsknotens umfasst, die erste Anfangskennung eine Kennung des Previous-Hop-Weiterleitungsknotens oder eine Kennung des ersten Sendeknotens ist und die Kennung des ersten Empfangsknotens dazu verwendet wird, zu erkennen, ob der Weiterleitungsknoten die Kennung des ersten Empfangsknotens speichert;
Bestimmen, auf einer Backhaul-Adaption-Protocol-Schicht, BAP-Schicht, einer Kennung eines Next-Hop-Knotens, wobei die Kennung des Next-Hop-Knotens durch den Weiterleitungsknoten erlangt wird, indem basierend auf einer Kennung, der die erste Kennung zugeordnet ist, nach einer Routing-Tabelle gesucht wird, die mit der Kennung verknüpft ist, der die erste Kennung zugeordnet ist;
Erlangen der Kennung des Next-Hop-Knotens aus der Routing-Tabelle; und
Weiterleiten des ersten Datenpakets an einen Knoten, der der Kennung des Next-Hop-Knotens entspricht, wobei auf einer Media-Access-Control-Schicht, MAC-Schicht, in dem Weiterleitungsknoten die erste Anfangskennung in dem ersten Datenpaket auf die zweite Kennung eingestellt ist und die erste Kennung in dem ersten Datenpaket auf die Kennung des Next-Hop-Knotens eingestellt ist,
wobei entweder,
wenn der Weiterleitungsknoten eine empfangende BAP-Schicht und eine sendende BAP-Schicht umfasst und die empfangende BAP-Schicht oder die sendende BAP-Schicht durch alle SL-Verbindungen gemeinsam genutzt wird, das Bestimmen, auf einer BAP-Schicht, einer Kennung eines Next-Hop-Knotens Folgendes umfasst:
nach dem Empfangen des ersten Datenpakets, Bestimmen, durch die empfangende BAP-Schicht basierend auf der Kennung des ersten Empfangsknotens in dem ersten Datenpaket, ob die Kennung des ersten Empfangsknotens gespeichert ist;
wenn bestimmt wird, dass die Kennung des ersten Empfangsknotens nicht existiert, Senden, durch die empfangende BAP-Schicht, des ersten Datenpakets an die sendende BAP-Schicht; und
Bestimmen, durch die sendende BAP-Schicht, der Kennung des Next-Hop-Knotens basierend auf der ersten Anfangskennung in dem ersten Datenpaket und anschließend Weiterleiten des ersten Datenpakets an einen Träger für die SL-Kommunikation, die zwischen dem ersten Sendeknoten und dem ersten Empfangsknoten hergestellt ist,
oder:
wenn der Weiterleitungsknoten eine BAP-Schicht umfasst und die BAP-Schicht durch alle SL-Verbindungen gemeinsam genutzt wird, das Bestimmen, auf einer BAP-Schicht, einer Kennung eines Next-Hop-Knotens Folgendes umfasst:
nach dem Empfangen des ersten Datenpakets, Bestimmen, durch die BAP-Schicht basierend auf der Kennung des ersten Empfangsknotens in dem ersten Datenpaket, ob die Kennung des ersten Empfangsknotens gespeichert ist; und,
wenn bestimmt wird, dass die Kennung des ersten Empfangsknotens nicht existiert, Bestimmen, durch die BAP-Schicht, der Kennung des Next-Hop-Knotens basierend auf der ersten Anfangskennung in dem ersten Datenpaket und anschließend Weiterleiten des ersten Datenpakets an einen Träger für die SL-Kommunikation, die zwischen dem ersten Sendeknoten und dem ersten Empfangsknoten hergestellt ist;
oder:
wenn der Weiterleitungsknoten mindestens zwei empfangende BAP-Schichten und mindestens zwei sendende BAP-Schichten umfasst, wobei jede empfangende BAP-Schicht und jede sendende BAP-Schicht einer SL-Verbindung entspricht und jede SL-Verbindung einem SL-Träger entspricht, das Bestimmen, auf einer BAP-Schicht, einer Kennung eines Next-Hop-Knotens Folgendes umfasst:
nach dem Empfangen des ersten Datenpakets unter Verwendung eines SL-Trägers, der einer ersten empfangenden BAP-Schicht entspricht, Bestimmen, durch die erste empfangende BAP-Schicht basierend auf der Kennung des ersten Empfangsknotens in dem ersten Datenpaket, ob die Kennung des ersten Empfangsknotens gespeichert ist;
wenn bestimmt wird, dass die Kennung des ersten Empfangsknotens nicht existiert, Senden, durch die erste empfangende BAP-Schicht, des ersten Datenpakets an eine erste sendende BAP-Schicht; und
Bestimmen, durch die erste sendende BAP-Schicht, der Kennung des Next-Hop-Knotens basierend auf der ersten Anfangskennung in dem ersten Datenpaket und anschließend Weiterleiten des ersten Datenpakets an einen SL-Träger, der der ersten sendenden BAP-Schicht entspricht, wobei die erste empfangende BAP-Schicht und die erste sendende BAP-Schicht Datenrouting für einen SL durchführen, der durch den ersten Sendeknoten und den ersten Empfangsknoten hergestellt ist;
oder:
wenn der Weiterleitungsknoten mindestens zwei BAP-Schichten umfasst, jede BAP-Schicht einer SL-Verbindung entspricht und jede SL-Verbindung mindestens zwei SL-Trägern entspricht, das Bestimmen, auf einer BAP-Schicht, einer Kennung eines Next-Hop-Knotens Folgendes umfasst:
nach dem Empfangen des ersten Datenpakets unter Verwendung eines ersten SL-Trägers, der einer ersten BAP-Schicht entspricht, Bestimmen, durch die erste BAP-Schicht basierend auf der Kennung des ersten Empfangsknotens in dem ersten Datenpaket, ob die Kennung des ersten Empfangsknotens gespeichert ist; und,
wenn bestimmt wird, dass die Kennung des ersten Empfangsknotens nicht existiert, Bestimmen, durch die erste BAP-Schicht, der Kennung des Next-Hop-Knotens basierend auf der ersten Anfangskennung in dem ersten Datenpaket und anschließend Weiterleiten des ersten Datenpakets an einen zweiten SL-Träger, der der ersten BAP-Schicht entspricht, wobei die erste BAP-Schicht Datenrouting für einen SL durchführt, der durch den ersten Sendeknoten und den ersten Empfangsknoten hergestellt ist, der erste SL-Träger dazu verwendet wird, das erste Datenpaket zu empfangen und der zweite SL-Träger dazu verwendet wird, ein zweites Datenpaket zu senden.

2. Verfahren nach Anspruch 1, wobei das Verfahren vor dem Bestimmen, auf einer BAP-Schicht, einer Kennung eines Next-Hop-Knotens ferner Folgendes umfasst: Bestimmen, dass die Kennung des ersten Empfangsknotens auf der BAP-Schicht nicht existiert.

3. Kommunikationsverfahren, wobei das Verfahren durch einen Weiterleitungsknoten durchgeführt wird, der Weiterleitungsknoten dazu konfiguriert ist, Daten zwischen mindestens einem Sendeknoten und mindestens einem Empfangsknoten weiterzuleiten, der Weiterleitungsknoten eine erste Kennung speichert, die erste Kennung dazu verwendet wird, eine Sidelink-Kommunikation, SL-Kommunikation, zwischen dem mindestens einen Sendeknoten und dem mindestens einen Empfangsknoten herzustellen, und das Verfahren Folgendes umfasst:
Empfangen eines ersten Datenpakets, das durch einen Previous-Hop-Weiterleitungsknoten oder einen ersten Sendeknoten gesendet wird, wobei das erste Datenpaket eine erste Anfangskennung, eine erste Next-Hop-Kennung, eine Backhaul-Adaption-Protocol-Kennung, BAP-Kennung, und eine Kennung eines Empfangsknotens umfasst, die erste Anfangskennung eine Kennung des Previous-Hop-Weiterleitungsknotens oder eine Kennung des ersten Sendeknotens ist, die erste Next-Hop-Kennung die erste Kennung ist und die Kennung des Empfangsknotens dazu verwendet wird, zu erkennen, ob der Weiterleitungsknoten die Kennung des Empfangsknotens speichert;
Bestimmen, basierend auf der ersten Anfangskennung und der ersten Next-Hop-Kennung, einer Anzahl von Empfangsknoten, die ein Datenpaket empfangen können, das durch den Previous-Hop-Weiterleitungsknoten oder den ersten Sendeknoten gesendet wird; und,
wenn mindestens zwei Empfangsknoten vorhanden sind, Suchen, durch eine BAP-Schicht in dem Weiterleitungsknoten basierend auf der ersten Next-Hop-Kennung und der Kennung des Empfangsknotens, nach einer Routing-Tabelle, die mit der ersten Next-Hop-Kennung und mit der Kennung des Empfangsknotens verknüpft ist, und anschließend Erlangen einer Kennung eines Next-Hop-Knotens aus der gefundenen Routing-Tabelle.

4. Verfahren nach Anspruch 3, wobei das Verfahren ferner Folgendes umfasst:
Weiterleiten des ersten Datenpakets an einen Knoten, der der Kennung des Next-Hop-Knotens entspricht, wobei auf einer Media-Access-Control-Schicht, MAC-Schicht, angegeben ist, dass die erste Anfangskennung in dem ersten Datenpaket auf die erste Kennung eingestellt wird, und angegeben ist, dass die erste Next-Hop-Kennung in dem ersten Datenpaket auf die Kennung des Next-Hop-Knotens eingestellt wird.

5. Verfahren nach Anspruch 3 oder 4, wobei das Verfahren ferner Folgendes umfasst:
wenn bestimmt wird, dass es einen Empfangsknoten gibt, Weiterleiten des ersten Datenpakets an einen Next-Hop-Weiterleitungsknoten oder den Empfangsknoten, wobei auf der MAC-Schicht während des Weiterleitens die erste Anfangskennung in dem ersten Datenpaket auf die erste Kennung eingestellt wird und die erste Next-Hop-Kennung in dem ersten Datenpaket auf die Kennung des Next-Hop-Knotens oder die Kennung des Empfangsknotens eingestellt wird.

6. Kommunikationseinrichtung, wobei die Kommunikationseinrichtung ein Weiterleitungsknoten ist, der dazu konfiguriert ist, das Verfahren nach einem der Ansprüche 1 bis 5 durchzuführen.

7. Computerlesbares Speichermedium, wobei das computerlesbare Speichermedium Anweisungen speichert; und, wenn die Anweisungen auf einem Computer ausgeführt werden, der Computer in die Lage versetzt wird, das Verfahren nach einem der Ansprüche 1 bis 5 durchzuführen.

8. Computerprogrammprodukt, umfassend Anweisungen, wobei, wenn die Anweisungen auf einem Computer ausgeführt werden, der Computer in die Lage versetzt wird, das Verfahren nach einem der Ansprüche 1 bis 5 durchzuführen.

9. Kommunikationssystem, umfassend einen Sendeknoten, mindestens eine Kommunikationseinrichtung nach Anspruch 6 und einen Empfangsknoten.

## Revendications

1. Procédé de communication, dans lequel le procédé est réalisé par un nœud de transfert, le nœud de transfert est configuré pour transférer des données entre au moins un nœud émetteur et au moins un nœud récepteur, le nœud de transfert stocke un premier identifiant et un second identifiant, le premier identifiant et le second identifiant servent à établir une communication sidelink, SL, pour un premier nœud émetteur et un premier nœud récepteur, il existe une relation de mappage entre le premier identifiant et le second identifiant, et le procédé comprend :
la réception d'un premier paquet de données envoyé par un nœud de transfert de saut précédent ou par le premier nœud émetteur, dans lequel le premier paquet de données comprend un premier identifiant initial, le premier identifiant et un identifiant du premier nœud récepteur, le premier identifiant initial est un identifiant du nœud de transfert de saut précédent ou un identifiant du premier nœud émetteur, et l'identifiant du premier nœud récepteur est utilisé pour détecter si le nœud de transfert stocke l'identifiant du premier nœud récepteur ;
la détermination, au niveau d'une couche de protocole d'adaptation de liaison de retour, BAP, d'un identifiant d'un nœud de saut suivant, dans lequel l'identifiant du nœud de saut suivant est obtenu par le nœud de transfert en recherchant, sur la base d'un identifiant auquel le premier identifiant est mappé, une table de routage associée à l'identifiant auquel le premier identifiant est mappé ;
l'obtention de l'identifiant du nœud de saut suivant à partir de la table de routage ; et
le transfert du premier paquet de données vers un nœud correspondant à l'identifiant du nœud de saut suivant, dans lequel, au niveau d'une couche de contrôle d'accès au support, MAC, du nœud de transfert, le premier identifiant initial du premier paquet de données est défini sur le second identifiant, et le premier identifiant du premier paquet de données est défini sur l'identifiant du nœud de saut suivant,
dans lequel, soit lorsque le nœud de transfert comprend une couche BAP réceptrice et une couche BAP émettrice, et que la couche BAP réceptrice ou la couche BAP émettrice est partagée par toutes les connexions SL, la détermination, au niveau d'une couche BAP, d'un identifiant de nœud de saut suivant comprend :
après réception du premier paquet de données, le fait de déterminer, par la couche BAP réceptrice, sur la base de l'identifiant du premier nœud récepteur dans le premier paquet de données, si l'identifiant du premier nœud récepteur est stocké ;
lorsqu'il est déterminé que l'identifiant du premier nœud récepteur n'existe pas, l'envoi, par la couche BAP réceptrice, du premier paquet de données à la couche BAP émettrice ; et
la détermination, par la couche BAP émettrice, de l'identifiant du nœud de saut suivant sur la base du premier identifiant initial du premier paquet de données, puis le transfert du premier paquet de données vers un support pour la communication SL établie entre le premier nœud émetteur et le premier nœud récepteur, ou :
lorsque le nœud de transfert comprend une seule couche BAP et que la couche BAP est partagée par toutes les connexions SL, la détermination, au niveau d'une couche BAP, d'un identifiant de nœud de saut suivant comprend :
après réception du premier paquet de données, le fait de déterminer, par la couche BAP sur la base de l'identifiant du premier nœud récepteur dans le premier paquet de données, si l'identifiant du premier nœud récepteur est stocké ; et
lorsqu'il est déterminé que l'identifiant du premier nœud récepteur n'existe pas, la détermination, par la couche BAP, de l'identifiant du nœud de saut suivant sur la base du premier identifiant initial du premier paquet de données, puis le transfert du premier paquet de données vers un support pour la communication SL établie entre le premier nœud émetteur et le premier nœud récepteur ;
ou :
lorsque le nœud de transfert comprend au moins deux couches BAP réceptrices et au moins deux couches BAP émettrices, chaque couche BAP réceptrice et chaque couche BAP émettrice correspond à une connexion SL, et chaque connexion SL correspond à un support SL, la détermination, au niveau d'une couche BAP, d'un identifiant d'un nœud de saut suivant comprend :
après réception du premier paquet de données à l'aide d'un support SL correspondant à une première couche BAP réceptrice, le fait de déterminer, par la première couche BAP réceptrice, sur la base de l'identifiant du premier nœud récepteur dans le premier paquet de données, si l'identifiant du premier nœud récepteur est stocké ;
lorsqu'il est déterminé que l'identifiant du premier nœud récepteur n'existe pas, l'envoi, par la première couche BAP réceptrice, du premier paquet de données à une première couche BAP émettrice ; et
la détermination, par la première couche BAP émettrice, de l'identifiant du nœud de saut suivant sur la base du premier identifiant initial du premier paquet de données, puis le transfert du premier paquet de données vers un support SL correspondant à la première couche BAP émettrice, dans lequel la première couche BAP réceptrice et la première couche BAP émettrice réalisent le routage de données pour une SL établie entre le premier nœud émetteur et le premier nœud récepteur ;
ou :
lorsque le nœud de transfert comprend au moins deux couches BAP, chaque couche BAP correspond à une connexion SL, et chaque connexion SL correspond à au moins deux supports SL, la détermination, au niveau d'une couche BAP, d'un identifiant d'un nœud de saut suivant comprend :
après réception du premier paquet de données à l'aide d'un premier support SL correspondant à une première couche BAP, le fait de déterminer, par la première couche BAP sur la base de l'identifiant du premier nœud récepteur dans le premier paquet de données, si l'identifiant du premier nœud récepteur est stocké ; et
lorsqu'il est déterminé que l'identifiant du premier nœud récepteur n'existe pas, la détermination, par la première couche BAP, de l'identifiant du nœud de saut suivant sur la base du premier identifiant initial du premier paquet de données, puis le transfert du premier paquet de données vers un second support SL correspondant à la première couche BAP, dans lequel la première couche BAP réalise le routage de données pour une SL établie par le premier nœud émetteur et le premier nœud récepteur, le premier support SL est utilisé pour recevoir le premier paquet de données, et le second support SL est utilisé pour envoyer le second paquet de données.

2. Procédé selon la revendication 1, dans lequel, avant la détermination, au niveau d'une couche BAP, d'un identifiant d'un nœud de saut suivant, le procédé comprend en outre : le fait de déterminer que l'identifiant du premier nœud récepteur n'existe pas au niveau de la couche BAP.

3. Procédé de communication, dans lequel le procédé est réalisé par un nœud de transfert, le nœud de transfert étant configuré pour transférer des données entre au moins un nœud émetteur et au moins un nœud récepteur, le nœud de transfert stocke un premier identifiant, le premier identifiant est utilisé pour établir une communication sidelink, SL, entre l'au moins un nœud émetteur et l'au moins un nœud récepteur, et le procédé comprend :
la réception d'un premier paquet de données envoyé par un nœud de transfert de saut précédent ou par un premier nœud émetteur, dans lequel le premier paquet de données comprend un premier identifiant initial, un premier identifiant de saut suivant, un identifiant de protocole d'adaptation de liaison de retour, BAP, et un identifiant d'un nœud récepteur, le premier identifiant initial est un identifiant du nœud de transfert de saut précédent ou un identifiant du premier nœud émetteur, le premier identifiant de saut suivant est le premier identifiant, et l'identifiant du nœud récepteur est utilisé pour détecter si le nœud de transfert stocke l'identifiant du nœud récepteur ;
la détermination, sur la base du premier identifiant initial et du premier identifiant de saut suivant, du nombre de nœuds récepteurs pouvant recevoir un paquet de données envoyé par le nœud de transfert de saut précédent ou par le premier nœud émetteur ; et
lorsqu'il existe au moins deux nœuds récepteurs, la recherche, par une couche BAP du nœud de transfert, sur la base du premier identifiant de saut suivant et de l'identifiant du nœud récepteur, d'une table de routage associée au premier identifiant de saut suivant et à l'identifiant du nœud récepteur, puis l'obtention d'un identifiant d'un nœud de saut suivant à partir de la table de routage trouvée.

4. Procédé selon la revendication 3, dans lequel le procédé comprend en outre :
le transfert du premier paquet de données vers un nœud correspondant à l'identifiant du nœud de saut suivant, dans lequel, au niveau d'une couche de contrôle d'accès au support, MAC, il est indiqué que le premier identifiant initial du premier paquet de données doit être défini sur le premier identifiant, et il est indiqué que le premier identifiant de saut suivant du premier paquet de données doit être défini sur l'identifiant du nœud de saut suivant.

5. Procédé selon la revendication 3 ou 4, dans lequel le procédé comprend en outre :
lorsqu'il est déterminé qu'il existe un nœud récepteur, le transfert du premier paquet de données vers un nœud de saut suivant ou vers le nœud récepteur, dans lequel, au niveau d'une couche MAC du transfert, le premier identifiant initial du premier paquet de données est défini sur le premier identifiant, et le premier identifiant de saut suivant du premier paquet de données est défini sur l'identifiant du nœud de saut suivant ou l'identifiant du nœud récepteur.

6. Dispositif de communication, dans lequel le dispositif de communication est un nœud de transfert configuré pour réaliser le procédé selon l'une quelconque des revendications 1 à 5.

7. Support de stockage lisible par ordinateur, dans lequel le support de stockage lisible par ordinateur stocke des instructions ; et lorsque les instructions sont exécutées sur un ordinateur, l'ordinateur est en mesure de réaliser le procédé selon l'une quelconque des revendications 1 à 5.

8. Produit de programme informatique comprenant des instructions, dans lequel lorsque les instructions sont exécutées sur un ordinateur, l'ordinateur est en mesure de réaliser le procédé selon l'une quelconque des revendications 1 à 5.

9. Système de communication comprenant un nœud émetteur, au moins un dispositif de communication selon la revendication 6, et un nœud récepteur.
